# EUROPEAN PATENT APPLICATION

(11) **EP 4 741 912 A1**
(43) Date of publication of application: **13.05.2026**
(21) Application number: 25201456.8
(22) Date of filing: 10.09.2025
(51) Int. Cl.: G02C 5/14, G02C 5/22, G02C 11/00

(54) **OVER-EXTENSION HINGE FOR A PAIR OF AUGMENTED-REALITY GLASSES**

(30) Priority: 07.11.2024 US 202418940708
(71) Applicant: Meta Platforms Technologies, LLC, Menlo Park, CA 94025 (US)
(72) Inventor: WEBB, Michael, Menlo Park (US); PLETENETSKYY, Andriy, Menlo Park (US); ZHANG, Jack, Menlo Park (US)
(74) Representative: Murgitroyd & Company

(57) **Abstract**

Systems, methods, and devices, and computer program products are provided for hinge modules for smart glasses systems, and overextension hinge modules usable with one or more electronic components. In an example, an overextension hinge module may include a hinge base, a paddle connected to the hinge base via a travel pin, and a preloaded spring maintaining a base position between the hinge base and the paddle, allowing movement of the hinge base relative to the paddle along a predefined range. Various examples may include a primary pivot axis defining movement between a frame arm attached to a glasses frame, and an external pivot axis along an outer edge of the frame arm defining an over-extension of the pivot arm relative to the frame.

## Description

### TECHNICAL FIELD

This relates generally to hinges in augmented-reality glasses that are configured to accommodate multiple head shapes while ensuring the sensitive electronic components are not damaged.

### BACKGROUND

Smart devices are becoming increasingly integrated with wearable technology, such as glasses and other head-mounted devices. In various examples, smart devices may include a camera and display elements incorporated on or within glasses frames. The smart device may provide content through visual means, and provide unique usage features and experiences, including but not limited to virtual reality (VR), an augmented reality (AR), a mixed reality (MR), a hybrid reality, or some combination and/or derivatives thereof.

Smart glasses face unique challenges compared to traditional glasses, given the additional hardware and software components that may need to be provided within a limited area, e.g., within the frames. Smart glasses face additional user constraints and design considerations, given the anatomical differences between users, such as differing head sizes. For example, conventional eyewear frames may be more compliant and/or adjustable for varying head widths since they do not require the additional computing components and hardware. Smart glasses also often have larger cross sections to house internal electronics and hardware, making for inflexible frames. Frame extension and overextension of smart glasses are further limited, since overextension may be detrimental to internal systems, interfere with alignment, connectivity, etc., and typically should be avoided in many cases.

Accordingly, adjustability for varying head widths may not be readily performed on smart glasses because the internal mechanicals may not easily tolerate deformation. In addition, frames of smart glasses are usually injection molded, which doesn't take adjustment as easily as conventional eyewear made from wire or acetate. Such challenges may therefore result in user discomfort, e.g., head squeeze. Image clarity is also sensitive to deformation and bending of glasses frames, and other components, such as projectors, require isolation from contact to various enclosures.

As such, there is a need to address one or more of the above-identified challenges. A brief summary of solutions to the issues noted above are described below.

### SUMMARY

The present invention provides a pair of augmented-reality (AR) glasses, a hinge system of a pair augmented-reality glasses and a temple arm of a pair of augmented-reality glasses as defined in the appended claims.

In meeting the described challenges, the present disclosure provides systems, methods, and devices, for an overextension hinge, usable with various glasses technologies. According to various examples, an overextension hinge module may include a hinge base, a paddle connected to the hinge base via a travel pin, and a preloaded spring maintaining a base position between the hinge base and the paddle. In various examples, the paddle may include a cylindrical bearing surface to receive the travel pin, and the paddle may enable movement of the hinge base relative to the paddle along a predefined range. In other examples, the movement of the hinge base relative to the paddle along the predefined range may require a force corresponding a stiffness of the preloaded spring.

According to various aspects and examples, the predefined range may be up to about ten degrees. The hinge base may further include a first pair of attachments to secure the hinge base to a frame, and a second pair of attachments to secure the hinge base to a frame arm. Additionally, the stiffness of the preloaded spring is between 29-37 N/mm.

In accordance with a first aspect, there is provided a pair of augmented-reality (AR) glasses, comprising:
a primary hinge that comprises a primary pivot axis defining movement between a temple arm attached to a glasses frame, wherein the primary pivot axis provides an axis of rotation during closure and extension of the temple arm relative to the glasses frame between a first position and second position;
a secondary hinge that comprises a secondary pivot axis along an outer edge of the temple arm, wherein the secondary pivot axis is parallel to the primary pivot axis, wherein the secondary pivot axis provides an axis of rotation during an over-extension of the temple arm relative to the frame; and
an AR projection system coupled to the frame;
a battery located in the temple arm that is configured to provide power to the AR projection system coupled to the frame.

The over-extension may occur when an angle between the frame arm and the glasses frame exceeds 90 degrees.

The secondary hinge may enable over-extension up to ten degrees.

Rotation may occur on the secondary pivot axis after maximum rotation is achieved on the primary pivot axis.

The secondary hinge may comprise a spring that biases the temple arm to the second position during over-extension.

The spring may be one of a leaf spring, a coil spring, or a torsion spring.

The primary hinge and secondary hinge may be configured to allow the pass-through of a flexible circuit that electrically couples at least the AR projection system to the battery.

The secondary hinge may comprise a stop that limits the over-extension beyond ten degrees of the temple arm.

The secondary hinge is configured to be overextended along an additional axis of rotation and the system comprises a spring that controls movement along both the secondary pivot axis and the additional axis of rotation.

A portion of the secondary hinge may be coupled to the temple arm by one or more of welding, fasteners, and adhesives.

The secondary hinge may comprise:
a hinge base;
a paddle connected to the hinge base via a travel pin, wherein the paddle comprises a cylindrical bearing surface to receive the travel pin, and enable movement of the hinge base relative to the paddle along a predefined range;
a preloaded spring maintaining a base position between the hinge base and the paddle, wherein movement of the hinge base relative to the paddle along the predefined range requires a force corresponding a stiffness of the preloaded spring.

The predefined range may be within ten degrees.

The pair of AR glasses may comprise a first pair of attachments to secure the hinge base to a frame, and a second pair of attachments to secure the hinge base to a frame arm.

The stiffness of the preloaded spring may be between 29-37 N/mm.

In accordance with a second aspect, there is provided a hinge system of a pair augmented-reality glasses, comprising:
a primary hinge that comprises a primary pivot axis defining movement between a temple arm attached to a glasses frame, wherein the primary pivot axis provides an axis of rotation during closure and extension of the temple arm relative to the glasses frame between a first position and second position;
a secondary hinge that comprises a secondary pivot axis along an outer edge of the temple arm, wherein the secondary pivot axis is parallel to the primary pivot axis, wherein the secondary pivot axis provides an axis of rotation during an over-extension of the temple arm relative to the frame; and
an AR projection system coupled to the frame;
a battery located in the temple arm that is configured to provide power to the AR projection system coupled to the frame.

Over-extension may occur when an angle between the frame arm and the glasses frame exceeds 90 degrees.

The secondary hinge may enable over-extension up to ten degrees.

In accordance with a third aspect, there is provided a temple arm of a pair of augmented-reality glasses, comprising:
a primary hinge that comprises a primary pivot axis defining movement between a temple arm attached to a glasses frame, wherein the primary pivot axis provides an axis of rotation during closure and extension of the temple arm relative to the glasses frame between a first position and second position;
a secondary hinge that comprises a secondary pivot axis along an outer edge of the temple arm, wherein the secondary pivot axis is parallel to the primary pivot axis, wherein the secondary pivot axis provides an axis of rotation during an over-extension of the temple arm relative to the frame; and
an AR projection system coupled to the frame;
a battery located in the temple arm that is configured to provide power to the AR projection system coupled to the frame.

Over-extension may occur when an angle between the frame arm and the glasses frame exceeds 90 degrees.

The secondary hinge may enable over-extension up to ten degrees.

Additional advantages will be set forth in part in the description which follows or may be learned by practice. The advantages will be realized and attained by means of the elements and combinations particularly pointed out in the appended claims. It is to be understood that both the foregoing general description and the following detailed description are exemplary and explanatory only and are not restrictive, the invention being defined in the appended claims.

The devices and/or systems described herein can be configured to include instructions that cause the performance of methods and operations associated with the presentation and/or interaction with an extended-reality (XR) headset. These methods and operations can be stored on a non-transitory computer-readable storage medium of a device or a system. It is also noted that the devices and systems described herein can be part of a larger, overarching system that includes multiple devices. A non-exhaustive of list of electronic devices that can, either alone or in combination (e.g., a system), include instructions that cause the performance of methods and operations associated with the presentation and/or interaction with an XR experience include an extended-reality headset (e.g., a mixed-reality (MR) headset or a pair of augmented-reality (AR) glasses as two examples), a wrist-wearable device, an intermediary processing device, a smart textile-based garment, etc. For example, when an XR headset is described, it is understood that the XR headset can be in communication with one or more other devices (e.g., a wrist-wearable device, a server, intermediary processing device) which together can include instructions for performing methods and operations associated with the presentation and/or interaction with an extended-reality system (i.e., the XR headset would be part of a system that includes one or more additional devices). Multiple combinations with different related devices are envisioned, but not recited for brevity.

The features and advantages described in the specification are not necessarily all inclusive and, in particular, certain additional features and advantages will be apparent to one of ordinary skill in the art in view of the drawings, specification, and claims. Moreover, it should be noted that the language used in the specification has been principally selected for readability and instructional purposes.

It will be appreciated that any features described herein as being suitable for incorporation into one or more aspects are intended to be generalizable across any and all aspects described herein. Other aspects can be understood by those skilled in the art in light of the description, the claims and the drawings. The foregoing general description and the following detailed description are exemplary and explanatory only and are not restrictive of the claims.

Having summarized the above example aspects, a brief description of the drawings will now be presented.

### BRIEF DESCRIPTION OF THE DRAWINGS

For a better understanding of the various described embodiments, reference should be made to the Detailed Description below, in conjunction with the following drawings in which like reference numerals refer to corresponding parts throughout the figures.
Figure 1 illustrates overextension on glasses modules, and corresponding temple force versus displacement, in accordance with various aspects discussed herein.
Figure 2A illustrates another example of pivot axes corresponding to a hinge module, in accordance with various aspects discussed herein.
Figure 2B illustrates a hinge module and attachment mechanisms, in accordance with various aspects discussed herein.
Figure 3 illustrates overextension bearing surfaces in accordance with various aspects discussed herein.
Figure 4 illustrates a pivot implementation, in accordance with various aspects discussed herein.
Figure 5 illustrates hinge module actuation (nominal vs. over-extended) in accordance with various aspects discussed herein.
Figure 6 illustrates a hinge paddle in accordance with various aspects discussed herein.
Figure 7 illustrates stiffness approximations in accordance with various aspects discussed herein.
Figure 8 illustrates two-dimensional overextension in accordance with various aspects discussed herein.
Figure 9 illustrates a grounding path for the hinge module and associated components in accordance with various aspects discussed herein.
Figure 10 illustrates another over-extension hinge 1000 that can operate between a natural (resting state) and a deflected state (non-resting state), in accordance with some embodiments.
Figures 11A and 11B illustrate a leaf spring (e.g., a flexure spring) that controls the movement of the over-extension hinge, in accordance with some embodiments.
Figure 12 shows a method 1200 of assembling an over-extension hinge 1201, in accordance with some embodiments.
Figures 13A, 13B, 13C-1, and 13C-2 illustrate example MR and AR systems, in accordance with some embodiments.

In accordance with common practice, the various features illustrated in the drawings may not be drawn to scale. Accordingly, the dimensions of the various features may be arbitrarily expanded or reduced for clarity. In addition, some of the drawings may not depict all of the components of a given system, method, or device. Finally, like reference numerals may be used to denote like features throughout the specification and figures.

### DETAILED DESCRIPTION

Numerous details are described herein to provide a thorough understanding of the example embodiments illustrated in the accompanying drawings. However, some embodiments may be practiced without many of the specific details, and the scope of the claims is only limited by those features and aspects specifically recited in the claims. Furthermore, well-known processes, components, and materials have not necessarily been described in exhaustive detail so as to avoid obscuring pertinent aspects of the embodiments described herein.

### Overview

Embodiments of this disclosure can include or be implemented in conjunction with various types of extended-realities (XRs) such as mixed-reality (MR) and augmented-reality (AR) systems. MRs and ARs, as described herein, are any superimposed functionality and/or sensory-detectable presentation provided by MR and AR systems within a user's physical surroundings. Such MRs can include and/or represent virtual realities (VRs) and VRs in which at least some aspects of the surrounding environment are reconstructed within the virtual environment (e.g., displaying virtual reconstructions of physical objects in a physical environment to avoid the user colliding with the physical objects in a surrounding physical environment). In the case of MRs, the surrounding environment that is presented through a display is captured via one or more sensors configured to capture the surrounding environment (e.g., a camera sensor, time-of-flight (ToF) sensor). While a wearer of an MR headset can see the surrounding environment in full detail, they are seeing a reconstruction of the environment reproduced using data from the one or more sensors (i.e., the physical objects are not directly viewed by the user). An MR headset can also forgo displaying reconstructions of objects in the physical environment, thereby providing a user with an entirely VR experience. An AR system, on the other hand, provides an experience in which information is provided, e.g., through the use of a waveguide, in conjunction with the direct viewing of at least some of the surrounding environment through a transparent or semitransparent waveguide(s) and/or lens(es) of the AR glasses. Throughout this application, the term "extended reality (XR)" is used as a catchall term to cover both ARs and MRs. In addition, this application also uses, at times, a head-wearable device or headset device as a catchall term that covers XR headsets such as AR glasses and MR headsets.

As alluded to above, an MR environment, as described herein, can include, but is not limited to, non-immersive, semi-immersive, and fully immersive VR environments. As also alluded to above, AR environments can include marker-based AR environments, markerless AR environments, location-based AR environments, and projection-based AR environments. The above descriptions are not exhaustive and any other environment that allows for intentional environmental lighting to pass through to the user would fall within the scope of an AR, and any other environment that does not allow for intentional environmental lighting to pass through to the user would fall within the scope of an MR.

The AR and MR content can include video, audio, haptic events, sensory events, or some combination thereof, any of which can be presented in a single channel or in multiple channels (such as stereo video that produces a three-dimensional effect to a viewer). Additionally, AR and MR can also be associated with applications, products, accessories, services, or some combination thereof, which are used, for example, to create content in an AR or MR environment and/or are otherwise used in (e.g., to perform activities in) AR and MR environments.

Interacting with these AR and MR environments described herein can occur using multiple different modalities and the resulting outputs can also occur across multiple different modalities. In one example AR or MR system, a user can perform a swiping in-air hand gesture to cause a song to be skipped by a song-providing application programming interface (API) providing playback at, for example, a home speaker.

A hand gesture, as described herein, can include an in-air gesture, a surface-contact gesture, and or other gestures that can be detected and determined based on movements of a single hand (e.g., a one-handed gesture performed with a user's hand that is detected by one or more sensors of a wearable device (e.g., electromyography (EMG) and/or inertial measurement units (IMUs) of a wrist-wearable device, and/or one or more sensors included in a smart textile wearable device) and/or detected via image data captured by an imaging device of a wearable device (e.g., a camera of a head-wearable device, an external tracking camera setup in the surrounding environment)). "In-air" generally includes gestures in which the user's hand does not contact a surface, object, or portion of an electronic device (e.g., a head-wearable device or other communicatively coupled device, such as the wrist-wearable device), in other words the gesture is performed in open air in 3D space and without contacting a surface, an object, or an electronic device. Surface-contact gestures (contacts at a surface, object, body part of the user, or electronic device) more generally are also contemplated in which a contact (or an intention to contact) is detected at a surface (e.g., a single- or double-finger tap on a table, on a user's hand or another finger, on the user's leg, a couch, a steering wheel). The different hand gestures disclosed herein can be detected using image data and/or sensor data (e.g., neuromuscular signals sensed by one or more biopotential sensors (e.g., EMG sensors) or other types of data from other sensors, such as proximity sensors, ToF sensors, sensors of an IMU, capacitive sensors, strain sensors) detected by a wearable device worn by the user and/or other electronic devices in the user's possession (e.g., smartphones, laptops, imaging devices, intermediary devices, and/or other devices described herein).

The input modalities as alluded to above can be varied and are dependent on a user's experience. For example, in an interaction in which a wrist-wearable device is used, a user can provide inputs using in-air or surface-contact gestures that are detected using neuromuscular signal sensors of the wrist-wearable device. In the event that a wrist-wearable device is not used, alternative and entirely interchangeable input modalities can be used instead, such as camera(s) located on the headset/glasses or elsewhere to detect in-air or surface-contact gestures or inputs at an intermediary processing device (e.g., through physical input components (e.g., buttons and trackpads)). These different input modalities can be interchanged based on both desired user experiences, portability, and/or a feature set of the product (e.g., a low-cost product may not include hand-tracking cameras).

While the inputs are varied, the resulting outputs stemming from the inputs are also varied. For example, an in-air gesture input detected by a camera of a head-wearable device can cause an output to occur at a head-wearable device or control another electronic device different from the head-wearable device. In another example, an input detected using data from a neuromuscular signal sensor can also cause an output to occur at a head-wearable device or control another electronic device different from the head-wearable device. While only a couple examples are described above, one skilled in the art would understand that different input modalities are interchangeable along with different output modalities in response to the inputs.

Specific operations described above may occur as a result of specific hardware. The devices described are not limiting and features on these devices can be removed or additional features can be added to these devices. The different devices can include one or more analogous hardware components. For brevity, analogous devices and components are described herein. Any differences in the devices and components are described below in their respective sections.

As described herein, a processor (e.g., a central processing unit (CPU) or microcontroller unit (MCU)), is an electronic component that is responsible for executing instructions and controlling the operation of an electronic device (e.g., a wrist-wearable device, a head-wearable device, a handheld intermediary processing device (HIPD), a smart textile-based garment, or other computer system). There are various types of processors that may be used interchangeably or specifically required by embodiments described herein. For example, a processor may be (i) a general processor designed to perform a wide range of tasks, such as running software applications, managing operating systems, and performing arithmetic and logical operations; (ii) a microcontroller designed for specific tasks such as controlling electronic devices, sensors, and motors; (iii) a graphics processing unit (GPU) designed to accelerate the creation and rendering of images, videos, and animations (e.g., VR animations, such as three-dimensional modeling); (iv) a field-programmable gate array (FPGA) that can be programmed and reconfigured after manufacturing and/or customized to perform specific tasks, such as signal processing, cryptography, and machine learning; or (v) a digital signal processor (DSP) designed to perform mathematical operations on signals such as audio, video, and radio waves. One of skill in the art will understand that one or more processors of one or more electronic devices may be used in various embodiments described herein.

As described herein, controllers are electronic components that manage and coordinate the operation of other components within an electronic device (e.g., controlling inputs, processing data, and/or generating outputs). Examples of controllers can include (i) microcontrollers, including small, low-power controllers that are commonly used in embedded systems and Internet of Things (IoT) devices; (ii) programmable logic controllers (PLCs) that may be configured to be used in industrial automation systems to control and monitor manufacturing processes; (iii) system-on-a-chip (SoC) controllers that integrate multiple components such as processors, memory, I/O interfaces, and other peripherals into a single chip; and/or (iv) DSPs. As described herein, a graphics module is a component or software module that is designed to handle graphical operations and/or processes and can include a hardware module and/or a software module.

As described herein, memory refers to electronic components in a computer or electronic device that store data and instructions for the processor to access and manipulate. The devices described herein can include volatile and non-volatile memory. Examples of memory can include (i) random access memory (RAM), such as DRAM, SRAM, DDR RAM or other random access solid state memory devices, configured to store data and instructions temporarily; (ii) read-only memory (ROM) configured to store data and instructions permanently (e.g., one or more portions of system firmware and/or boot loaders); (iii) flash memory, magnetic disk storage devices, optical disk storage devices, other non-volatile solid state storage devices, which can be configured to store data in electronic devices (e.g., universal serial bus (USB) drives, memory cards, and/or solid-state drives (SSDs)); and (iv) cache memory configured to temporarily store frequently accessed data and instructions. Memory, as described herein, can include structured data (e.g., SQL databases, MongoDB databases, GraphQL data, or JSON data). Other examples of memory can include (i) profile data, including user account data, user settings, and/or other user data stored by the user; (ii) sensor data detected and/or otherwise obtained by one or more sensors; (iii) media content data including stored image data, audio data, documents, and the like; (iv) application data, which can include data collected and/or otherwise obtained and stored during use of an application; and/or (v) any other types of data described herein.

As described herein, a power system of an electronic device is configured to convert incoming electrical power into a form that can be used to operate the device. A power system can include various components, including (i) a power source, which can be an alternating current (AC) adapter or a direct current (DC) adapter power supply; (ii) a charger input that can be configured to use a wired and/or wireless connection (which may be part of a peripheral interface, such as a USB, micro-USB interface, near-field magnetic coupling, magnetic inductive and magnetic resonance charging, and/or radio frequency (RF) charging); (iii) a power-management integrated circuit, configured to distribute power to various components of the device and ensure that the device operates within safe limits (e.g., regulating voltage, controlling current flow, and/or managing heat dissipation); and/or (iv) a battery configured to store power to provide usable power to components of one or more electronic devices.

As described herein, peripheral interfaces are electronic components (e.g., of electronic devices) that allow electronic devices to communicate with other devices or peripherals and can provide a means for input and output of data and signals. Examples of peripheral interfaces can include (i) USB and/or micro-USB interfaces configured for connecting devices to an electronic device; (ii) Bluetooth interfaces configured to allow devices to communicate with each other, including Bluetooth low energy (BLE); (iii) near-field communication (NFC) interfaces configured to be short-range wireless interfaces for operations such as access control; (iv) pogo pins, which may be small, spring-loaded pins configured to provide a charging interface; (v) wireless charging interfaces; (vi) global-positioning system (GPS) interfaces; (vii) Wi-Fi interfaces for providing a connection between a device and a wireless network; and (viii) sensor interfaces.

As described herein, sensors are electronic components (e.g., in and/or otherwise in electronic communication with electronic devices, such as wearable devices) configured to detect physical and environmental changes and generate electrical signals. Examples of sensors can include (i) imaging sensors for collecting imaging data (e.g., including one or more cameras disposed on a respective electronic device, such as a simultaneous localization and mapping (SLAM) camera); (ii) biopotential-signal sensors; (iii) IMUs for detecting, for example, angular rate, force, magnetic field, and/or changes in acceleration; (iv) heart rate sensors for measuring a user's heart rate; (v) peripheral oxygen saturation (SpO₂) sensors for measuring blood oxygen saturation and/or other biometric data of a user; (vi) capacitive sensors for detecting changes in potential at a portion of a user's body (e.g., a sensor-skin interface) and/or the proximity of other devices or objects; (vii) sensors for detecting some inputs (e.g., capacitive and force sensors); and (viii) light sensors (e.g., ToF sensors, infrared light sensors, or visible light sensors), and/or sensors for sensing data from the user or the user's environment. As described herein biopotential-signal-sensing components are devices used to measure electrical activity within the body (e.g., biopotential-signal sensors). Some types of biopotential-signal sensors include (i) electroencephalography (EEG) sensors configured to measure electrical activity in the brain to diagnose neurological disorders; (ii) electrocardiography (ECG or EKG) sensors configured to measure electrical activity of the heart to diagnose heart problems; (iii) EMG sensors configured to measure the electrical activity of muscles and diagnose neuromuscular disorders; (iv) electrooculography (EOG) sensors configured to measure the electrical activity of eye muscles to detect eye movement and diagnose eye disorders.

As described herein, an application stored in memory of an electronic device (e.g., software) includes instructions stored in the memory. Examples of such applications include (i) games; (ii) word processors; (iii) messaging applications; (iv) media-streaming applications; (v) financial applications; (vi) calendars; (vii) clocks; (viii) web browsers; (ix) social media applications; (x) camera applications; (xi) web-based applications; (xii) health applications; (xiii) AR and MR applications; and/or (xiv) any other applications that can be stored in memory. The applications can operate in conjunction with data and/or one or more components of a device or communicatively coupled devices to perform one or more operations and/or functions.

As described herein, communication interface modules can include hardware and/or software capable of data communications using any of a variety of custom or standard wireless protocols (e.g., IEEE 802.15.4, Wi-Fi, ZigBee, 6LoWPAN, Thread, Z-Wave, Bluetooth Smart, ISA100.11a, WirelessHART, or MiWi), custom or standard wired protocols (e.g., Ethernet or HomePlug), and/or any other suitable communication protocol, including communication protocols not yet developed as of the filing date of this document. A communication interface is a mechanism that enables different systems or devices to exchange information and data with each other, including hardware, software, or a combination of both hardware and software. For example, a communication interface can refer to a physical connector and/or port on a device that enables communication with other devices (e.g., USB, Ethernet, HDMI, or Bluetooth). A communication interface can refer to a software layer that enables different software programs to communicate with each other (e.g., APIs and protocols such as HTTP and TCP/IP).

As described herein, a graphics module is a component or software module that is designed to handle graphical operations and/or processes and can include a hardware module and/or a software module.

As described herein, non-transitory computer-readable storage media are physical devices or storage medium that can be used to store electronic data in a non-transitory form (e.g., such that the data is stored permanently until it is intentionally deleted and/or modified).

### Smart Glasses Over-Extension Mechanism

In various aspects, systems, methods, and devices provide an overextension mechanism applicable to wearable technology such as glasses and other head-mounted devices. The techniques and aspects discussed herein differentiate and improve upon conventional systems, at least by providing a mechanism to resist deflection to protect internal electrical, optical, and mechanical systems. In various embodiments, such as smart glasses, and head-mounted systems, a frame may include a front-frame and a temple-arm enclosure to resist excessive deflection.

Systems, methods, and devices further enable the ability to incorporate rigid components and still be compliant to fit varying head widths, by at least incorporating an overextension hinge. Such hinge may provide a torsionally sprung pivot axis between frames and temples, which allow for a range of temple width positions to accommodate varying head widths with one common design.

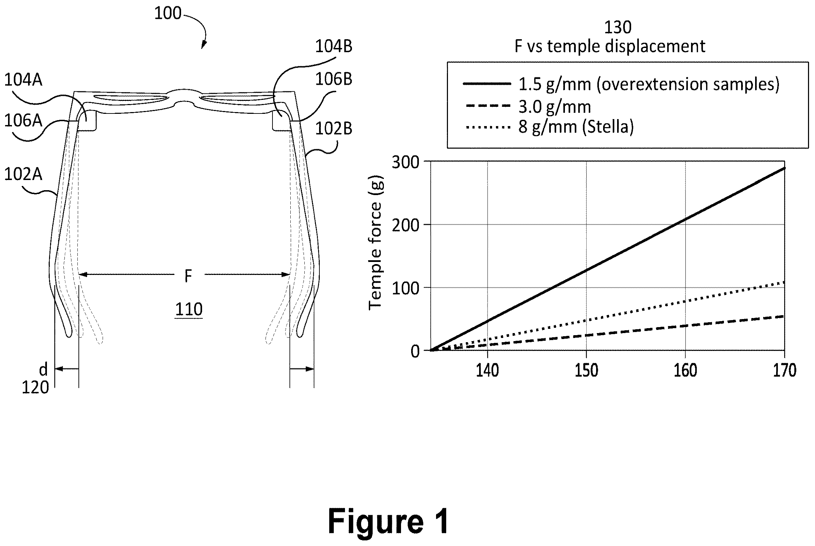

FIG. 1 illustrates a top view of a glasses system 100 and a corresponding Force vs. Displacement graph 130 corresponding to "head squeeze." Frame arms 102A and 102B of glasses 100 may extend a distance, d, 120, for example, to adjust for varying head sizes and width. A corresponding Force, F, 110, corresponds to the inward force of the frame arms, which may be exerted on a wearer's head. Graph 130 illustrates how, for a given stiffness (e.g., 1.5 g/mm, 3.0 g/mm, or 8.0 g/mm), the force changes relative to displacement, d, 120. Forces greater than about 1 Newton may be considered uncomfortable by users, and therefore, there is a need to both accommodate varying head sizes and widths while reducing the amount of pressure, e.g., "head squeeze" on a user's temples. The glasses system can include two hinges, a primary hinge (i.e., 104A and 104B) that primarily controls the movement between the folded state of the frame arms (e.g., a stored state) and the extended state of the frame arms (e.g., the wearable state). A secondary hinge (e.g., 106A and 106B), as discussed herein can extend beyond the movement range of the primary hinge, and allow for an even greater range of head sizes to be accommodate. Moreover, the secondary hinge can be spring loaded which can ensure the glasses system always remains snug on the user's face regardless of head size.

Moreover, image clarity on smart glasses may be very sensitive to waveguide bending, and any projectors may need to be isolated from contact with various components, such as the frames and other enclosures. According to various examples discussed herein, projectors for smart glasses may be placed within, or substantially near the frame joint. Since clearance is required around projectors, clearance spacing may be up to approximately 1 mm.

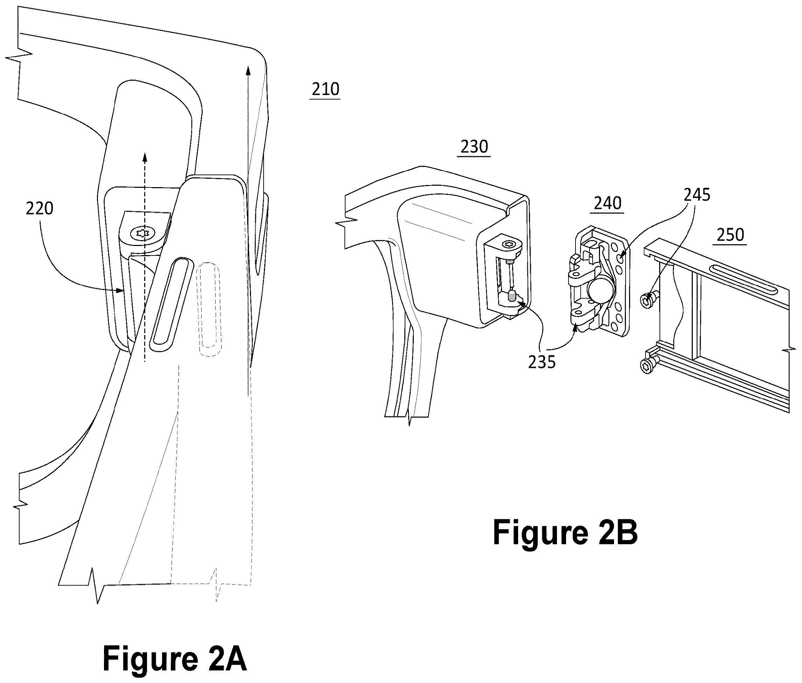

FIGs. 2A-2B illustrates an example hinge mechanism including a "sliding design" with an overextension pivot along an outer axis of the frame. FIG. 2A illustrates a primary pivot axis 220 corresponding to a mechanical pivot joint allowing a frame arm to close and extend. Aspects of the present disclosure provide an external pivot axis 210 for overextension. In other words, when the frame arm overextends, it pivots around external pivot axis 120, and the external pivot axis prevents both gaps between the frame and arm, as well as rubbing/contact between the components.

FIG. 2B provides additional views and details regarding the hinge module and operation. The frame 230 may include an attachment mechanism 235 that connects to hinge module 240, e.g., via one or more screws and/or interlocks. The screws may be vertically disposed, e.g., along the primary pivot axis 220. The primary pivot axis 220 enables closure of the arms relative to the frame, for example, when storing the glasses and otherwise when not in use. The hinge module 240 may further attach 245 to the frame arm. In some examples, one or more screws may attach to the frame arm, and may horizontally attach to the frame arm 250. In some examples the first set of attachments 235 linking the frame 230 and hinge module 240 may be orthogonal to the set of attachments 245 linking the hinge module to the frame arm 250.

As will be discussed further the attachment mechanism 235 can also be defined as the primary hinge, capable of a greater range of motion than the secondary hinge. In this example, the secondary hinge can also be referred to as a hinge module 240.

The hinge module 240 may reside complete within the frame arms. During a closure of the frame arms, wherein the frame arm 250 is brought closer to the frame 230, or an extension of the frame arms, wherein the frame arm 250 is brought away from the frame 230 but not overextended, the frame arms 250 may rotate about the primary pivot axis. During an overextension, wherein the frame arm 250 is extended beyond its natural open position, the hinge module 240 enables pivoting along the external pivot axis 210.

In various examples, a bistable lock may be implemented such that when the frame arms reach a particular "closed" or "open" position, they remain in place, stable, until a force sufficient to overcome the stable position allows pivoting along either the primary pivot axis 220 or the external pivot axis 210.

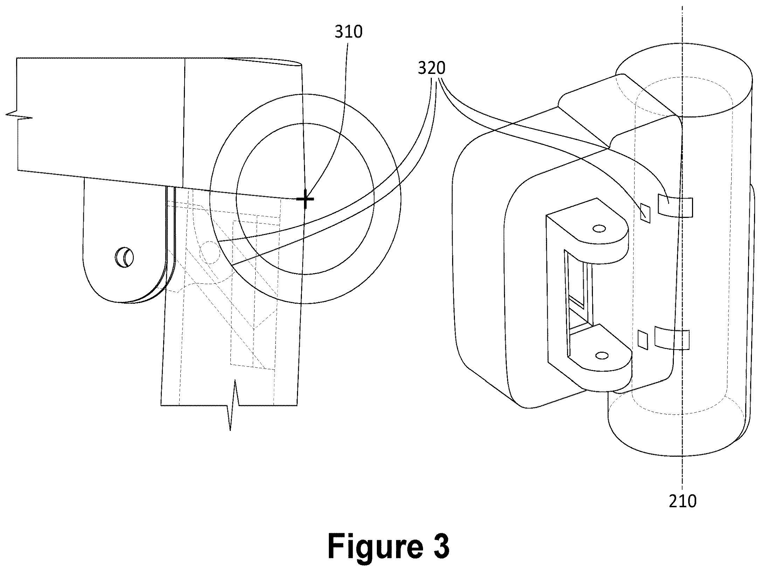

FIG. 3 illustrates a top view of the "sliding design" and overextension mechanism discussed in FIGs. 2A-2B. The overextension axis 310 corresponds to the external pivot axis 210 illustrated in FIG. 2A. The pivot axis may be defined by a cylindrical bearing surface comprising attachments 320, which connect the frame to the arm. The attachments 320 may comprise a spatial area allowing for a pivoting within a certain range, such as 5, 10, 15, 20 degrees or more. It should be appreciated that FIG. 3 illustrates just one way, as an example, for attaching the frame and arms to define the overextension external pivot axis 210, and any of a variety of attachment positions, points, and arrangements may be implemented according to design considerations, hardware/software considerations, internal components, and the like.

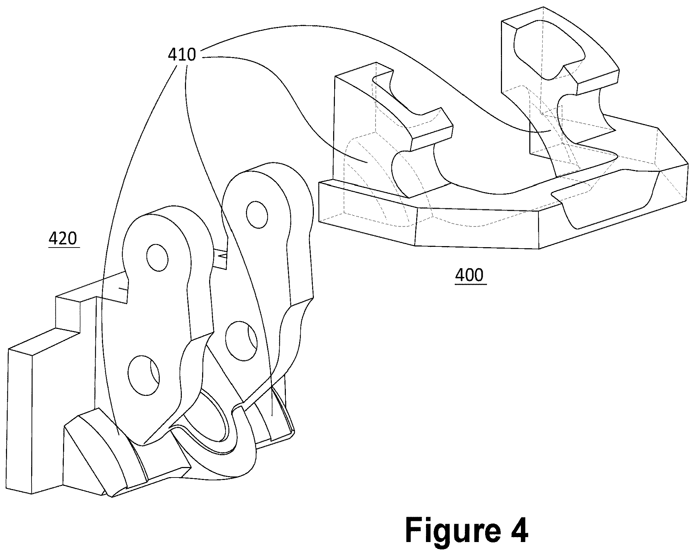

FIG. 4 illustrates a pivot implementation according to various aspects discussed herein. A hinge base 420 attaches to paddle 400 to form the basis of the overextension sliding design, as discussed herein. The paddle 400 includes cylindrical bearing surfaces 410, which provides the range of overextension and defines the external pivot axis.

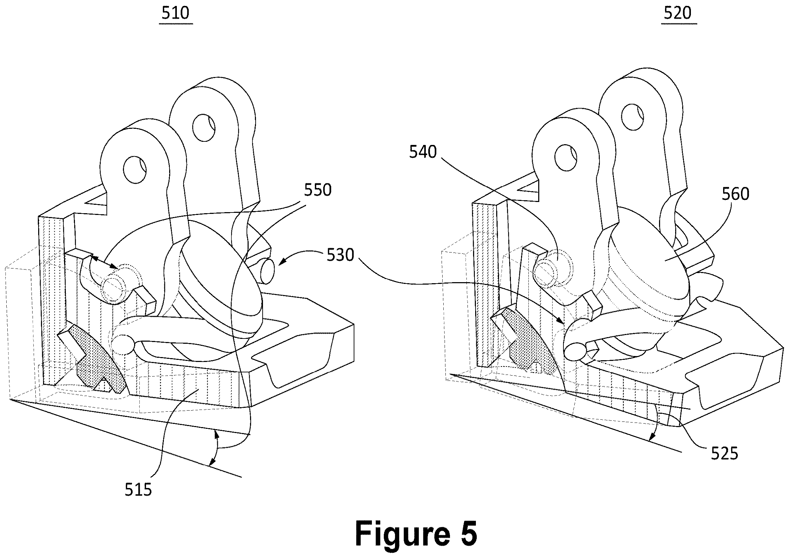

FIG. 5 illustrates the nominal position 510 and over-extended position 520 resulting from the connections between the hinge base, paddle, and spring mechanism. The paddle 400 may be held in its base position 515 by a preloaded spring 530. The preloaded spring 530 may further be held in place by spring screw 560. A travel pin 540 may provide additional attachment security between hinge base 420 and paddle 400.

In the nominal position 510, wherein the frame arm is in its natural, extended position, preloaded spring 540 secures the position of the hinge base 420 relative to the paddle 400. Spring 540 may assist in providing the stable position for the bistable lock discussed herein.

When the frame arm is in the overextended position 520, travel pin(s) 540 travels along the surface defined by the cylindrical bearing surface 410 to allow the overextension along the external pivot axis along an overextension angle range 550. In some examples, the travel pin(s) 540 may provide travel stops, limiting overextension via the cylindrical bearing surface, within a desired range. According to various examples, the overextension may be within a range of 5, 10, 15, or 20 degrees past the nominal position 510. Moreover, in the over-extended position 520, the arms of the preloaded spring 530 may provide a force, depending on the stiffness of the spring, to bring the hinge base 420 and paddle 400 back to the nominal position 510. The force may be provided by spring arms extending from the preloaded spring 530.

According to various aspects, any of a plurality of materials may be used for various components of the hinge systems discussed herein. For example, a hinge base 420 (see, e.g., FIG. 4) may include stainless steel, such as 316 grade stainless steel. The hinge base may be formed using metal injection molding (MIM) and/or computer numerical control (CNC).

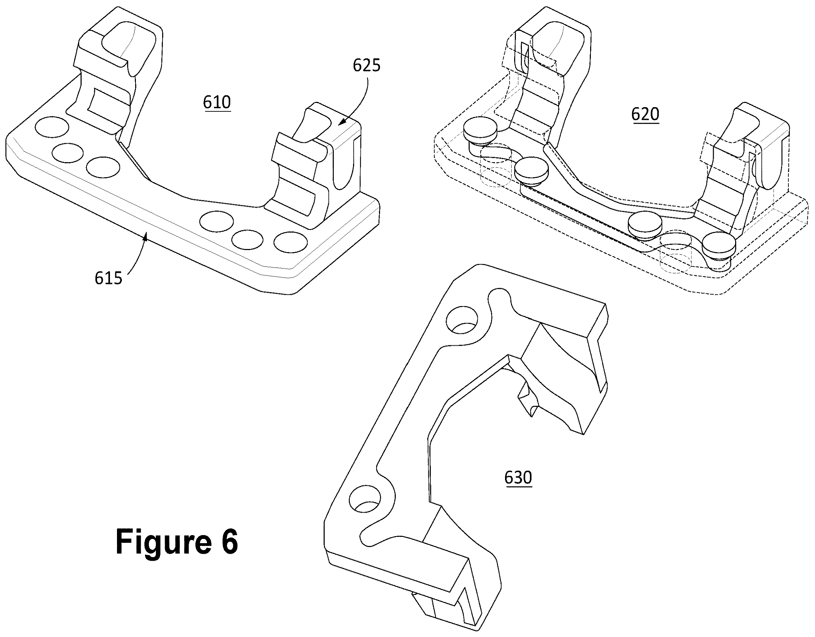

Travel pins 540 may likewise include stainless steel, and according to some aspects, may be formed using a screw machine. Bearings 410 may include nylon, and manufacturing processes may utilize injection molding. Paddle 400 may include stainless steel and/or nylon. The paddle (see, e.g., FIG. 6) may be formed using MIM, overmolding, and/or CNC. A spring post, upon which spring 530 is attached, may include stainless steel, such as 316 grade stainless steel and formed using CNC. The spring 530 may include spring steel, springform, and/or any of a plurality of materials and manufacturing methods in accordance with aspects discussed herein. Spring screw 560 may also include stainless steel, such as 316 grade stainless steel, and may be formed using a screw machine.

According to some aspects, as illustrated in FIG. 6, the paddle may include metal to reinforce strength and grounding. FIG. 6 illustrates a top, perspective view 610 of the paddle, a top, perspective, transparent view 620, and a bottom, perspective view 630 of the paddle. According to various aspects, the paddle base 615 may be formed using metal injection molding. An over mold 625 may form the remaining contours of the paddle. A secondary machining device may add any additional features, contours, and abutments, as needed to form the paddle.

In a similar manner, the hinge base 420 may be formed using metal injection molding. Tapping may be applied to form the necessary openings, for example, for travel pins 540, a receptacle for the spring post, and the like.

According to various aspects, an assembly sequence may include placing a bearing on a base, placing the paddle on the bearing, installing travel pins, installing the spring post, installing the spring, and installing the spring screw. In other examples, one or more components may be formed using 3D printing methods.

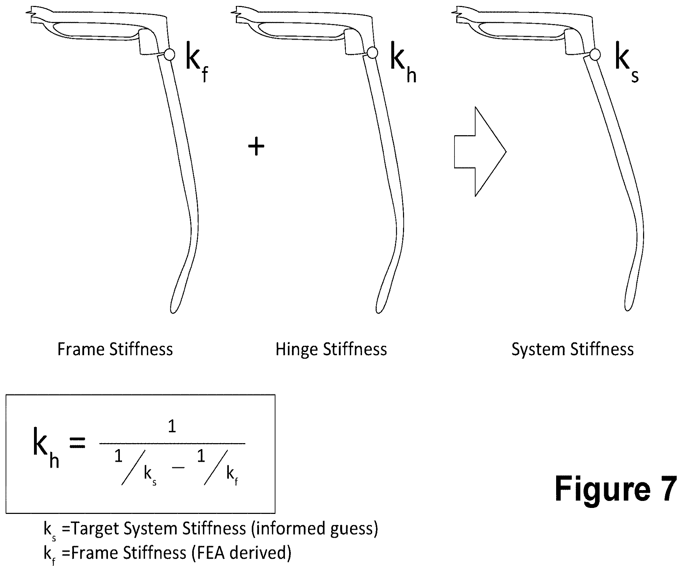

In various testing scenarios, finite element analysis (FEA) was applied to analyze spring performance. According to various aspects, as illustrated in FIG. 7, the hinge systems discussed herein may be analyzed as springs in series, wherein the frame stiffness (kf) and the hinge stiffness (kh) may form the system stiffness (ks). The equivalent spring constant for the system may be calculated using the equation provided in FIG. 7.

Calculations approximating the spring as a cantilever beam and combining the cantilever beam with the moment of inertia, may be used to determine various wire diameters usable in various examples discussed herein.

Table 1 provides a comparison of spring performance, based on various spring diameters, predicted force, stiffness, von Mises (VM) stress, yield stress, and VM/Yield Stress. FEA predicts a spring wire diameter of ~0.88mm, and various prototyping sample wire gauges included 0.0907 mm, 0.0808 mm, 0.072 mm, 0.0641 mm. According to Table 1, for a target stiffness of 31.4 N/mm, a spring diameter of 0.88 was found to be ideal. According to various examples, the stiffness of the preloaded spring may be between 29-37 N/mm.

**Table 1: Spring Performance, Target Stiffness = 31.4 N/mm**

| **Diameter (mm)** | **Force (N)** | **Stiffness (N/mm)** | **VM Stress (MPa)** | **Yield Stress (MPa)** | **VM stress/Yield stress** |
|---|---|---|---|---|---|
| 0.91 | 31.8 | 36.6 | 2161 | 2200 | 0.98 |
| 0.88 | 27.2 | 31.3 | 1923 | 2200 | 0.87 |
| 0.87 | 25.3 | 29.1 | 1844 | 2200 | 0.84 |

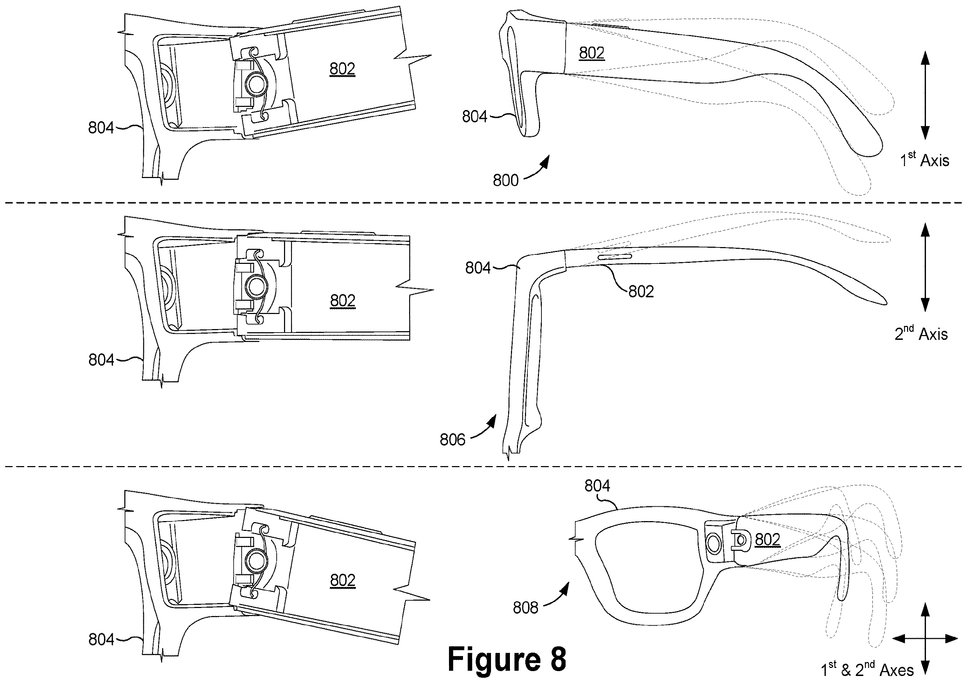

FIG. 8 illustrates an additional embodiment, enabling overextension in the two dimensions. In various examples, the bearing may be a spherical bearing, thus allowing additional temple deflection. The frame may extend in a vertical direction, e.g., about a horizontal axis, or in a lateral direction, e.g., about a vertical axis. FIG. 8 shows in a side view 800 that the temple arm 802 can move along a first axis relative to the lens-holding frame portion 804. A top-down view 806 shows that the temple arm 802 can also move along a second axis (different from the first axis) relative to the lens-holding frame portion 804. A perspective view 808 shows that the temple arm can move along both the first axis and the second axis concurrently allowing for a greater range of adjustment. In some embodiments, the force required to cause movement along the first axis or the second can be different (e.g., movement along the first axis requires more force than movement along the second axis). In some embodiments, a user-selectable lockout can exist to limit movement to only one of the first axis or the second axis. In some embodiments, the over-extension hinge can be locked to a position by a user, such that the adjustment remains in-between different use periods.

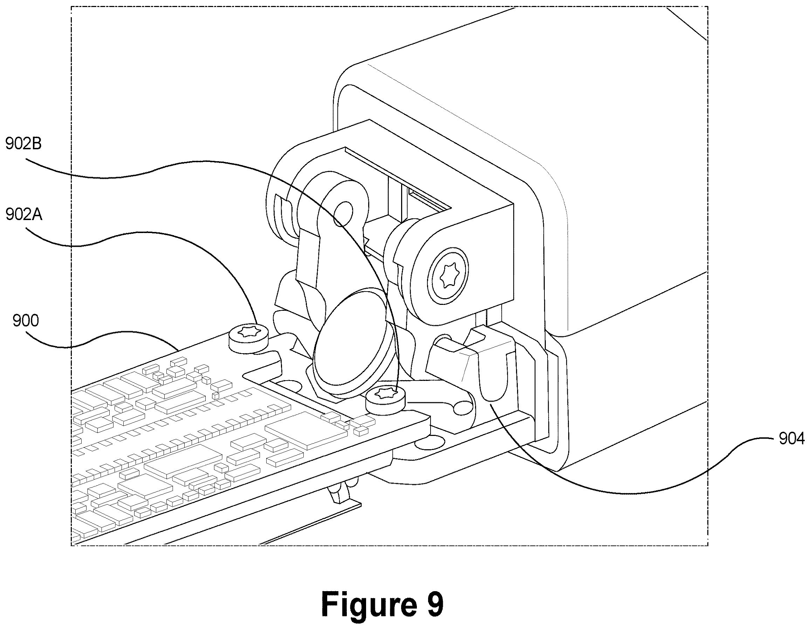

According to additional embodiments, as illustrated in FIG. 9, a ground path may be established, e.g., for grounding a circuit board adjacent to or nearby the hinge system. According to some examples, a circuit board 900 may contact one or more components of the hinge system. In some embodiments, screws 902A and 902B may contact exposed copper on a circuit board to act as a ground pathway. In some embodiments, the hinge paddle 904, which may be a steel paddle, may be threaded to the board and other components. In some embodiments, the spring 906 touches the paddle, and the spring touches the spring screw. In some embodiments, the rear, base of the hinge may receive the spring screw. In some embodiments, the hinge screw may thread into the rear base of the hinge, and the front of the hinge base may contact the hinge screw.

In some embodiments, the circuit board 900 housed within the temple arm can include one or more components for providing an extended-reality experience (e.g., an augmented-reality viewing experience) to the user. In some embodiments, the temple arm includes one or more batteries for powering the circuit board and other electrical components of the glasses.

According to various examples of the present disclosure, grounding may occur primarily through the spring. A minimum contact force may exist, such as for example a 15 N contact force. The sliding contact at the spring tip may be less than 0.3 mm.

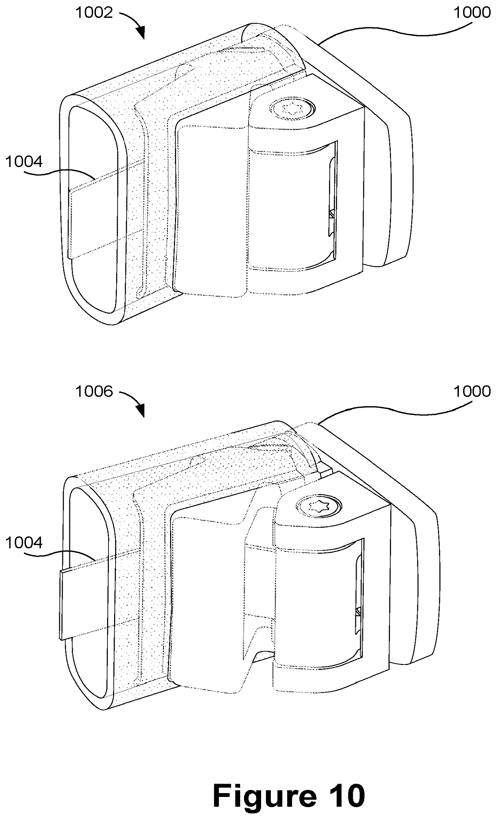

Figure 10 illustrates another over-extension hinge 1000 that can operate between a natural (resting state) and a deflected state (non-resting state), in accordance with some embodiments. Figure 10 shows another over-extension hinge 1000 in a natural state 1002 in which the over-extension hinge is not in its extended state. The over-extension hinge 1000 shows the over-extension hinge also accommodates a flexible circuit 1004 that transmits power and/or data between a temple arm and a lens frame.

Figure 10 also shows the over-extension hinge 1000 operating in the deflected state 1006, where the amount of deflection is at least partially determined by the maximum deflection the flexible circuit 1004. For example, the flexible circuit is designed to have enough play/length to accommodate the full motion of the over-extension hinge without sustaining any performance degradation as compared to head-wearable device without an over-extension hinge. In some embodiments, the flexible circuit can extend beyond the limit of the over-extension hinge 1000, e.g., by up to 5%, to increase longevity of the flexible circuit and account for device rigidity decreasing over time.

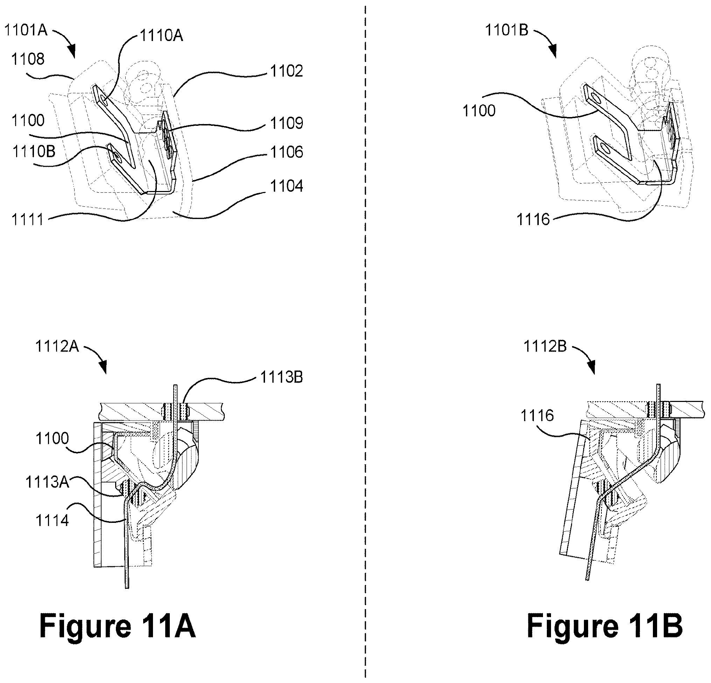

Figures 11A and 11B illustrate a leaf spring (e.g., a flexure spring) that controls the movement of the over-extension hinge, in accordance with some embodiments. The size and shape of the leaf spring 1100 within the over-extension hinge 1102 controls the movement of the over extension hinge. Figure 11A shows in a perspective view 1101A that the leaf spring 1100 as illustrated has a portion that is coupled the over-extension hinge base 1104. The hinge base 1104 includes a region 1109 that remains fixed relative to the frame portion 1106 (i.e., a portion configured to hold lenses and/or waveguides of a pair of augmented-reality glasses) when the primary hinge is in its extended state. The leaf spring is attached to the region 1109, and the leaf spring 1100 is also attached to the temple arm portion 1108 at locations 1110A and 1110B, which remain fixed relative to the temple arm. The leaf spring 1100 includes another region 1111 that is configured to flex and allow movement between the frame portion 1106 and the temple arm portion 1108. Figure 11A shows the over-extension hinge 1102 in a resting state, e.g., the position of the over extension hinge maintains when outside forces are not introduced. In some embodiments, the leaf spring includes preload for controlling the amount of force to cause deflection of the leaf spring 1100. Figure 11A also shows a top-down view 1112A (e.g., a cutaway view) that illustrates the position of the leaf spring 1100 within the over-extension hinge 1102. As shown in top-down view 1112A the leaf spring 1100 has a shape that accommodates a flexible circuit 1114 (e.g., flexible circuit 1004 in Figure 10) passing through the over-extension hinge 1102. Additionally, Figure 11A and 11B show that the flexible circuit 1114 can be formed with grommets 1113A and 1113B that control moisture ingress into the temple arm portion and frame portion of the augmented-reality glasses.

Figure 11B shows the leaf spring 1100 controlling the movement of the over-extension hinge, when the over-extension hinge is in the over-extended state. Comparing the perspective view 1101A of Figure 11A with the perspective view 1101B of Figure 11B, it is shown that the middle portion 1116 of the leaf spring 1100 deflects when the over-extension hinge enters the over-extended state.

The shape of the over extension hinge and/or the shape and thickness of the leaf spring 1100 can control the maximum deflection of the over-extension hinge, and the maximum deflection can be up to ten degrees. For example, a bearing 1118 is also shown in top-down view 1112B (e.g., a cutaway view) that can control the movement of the over-extension hinge, e.g., so the hinge only can deflect upon a predefined axis or axes.

By having an over-extension hinge, the augmented-reality glasses can accommodate a larger variety of head sizes. The leaf spring will also help secure the temple arms to the user as the over extension hinge will apply a securing force to the user's head as the leaf spring 1100 attempts to return to its undeflected state.

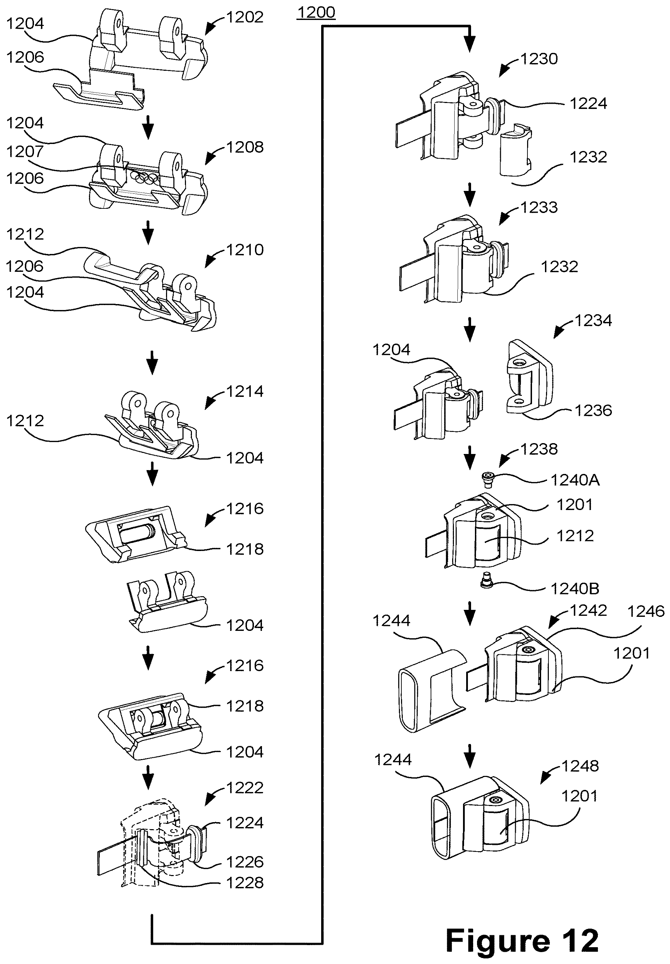

Figure 12 shows a method 1200 of assembling an over-extension hinge 1201, in accordance with some embodiments.

Figure 12 shows in first step 1202 that an over-extension hinge base 1204 and a leaf spring 1206 (e.g., a flexure) are provided. The over-extension hinge base is configured to be coupled with the primary hinge that is coupled to lens frame of the augmented-reality glasses.

Step 1208 shows the leaf spring 1206 being coupled (e.g., via welding (e.g., laser welding) at contact point(s) 1207) to the over-extension hinge base 1204. In some embodiments, other attachments can be used, such as adhesives, threaded fasteners and/or clips.

Step 1210 shows a bearing 1212 being provided. In some embodiments, the bearing 1212 is not permanently coupled and is held in place when the over-extension hinge is fully assembled. In some embodiments, the bearing 1212 is coupled to a surface of the over-extension hinge base 1204. The bearing is configured to seal a gap that is produced by the over-extension hinge moving, and the bearing 1212 is also configured to, in some embodiments, act as a stop for limiting the deflection of the leaf spring 1206. For example, at a certain amount of deflection the leaf spring will contact the bearing 1212 limiting further deflection of the leaf spring.

Step 1214 shows the bearing 1212 being placed relative to the over-extension hinge base 1204. Step 1216 shows a moving half 1218 being provided, which is configured to mount with the temple arm and move relative to the over-extension hinge base 1204. Step 1220 shows hingeably coupling the moving half 1218 with the over-extension hinge base 1204.

Step 1222 shows a flexible circuit 1224 being placed within the partially completed over-extension hinge. The flexible circuit 1224 includes a frame-side grommet 1226 that isolates the electronic components located within the frame from moisture and debris ingress. The flexible circuit 1224 also includes a temple-side grommet 1228 that isolates the electronic components located within the temple arm from moisture and debris ingress.

Step 1230 shows a barrel cover 1232 being provided that covers a portion of the flexible circuit 1224, covering the flexible circuit 1224 ensures the flexible circuit is not damaged during use. Step 1233 shows the shows the barrel cover 1232 being placed in position to be coupled in place in a later step.

Step 1234 shows hinge to front frame bracket 1236 being provided that interfaces with the barrel cover 1232 and the over-extension hinge base 1204. Step 1238 shows counter-sunk fasteners 1240A and 1240B (e.g., king pin screws that have a bearing surface) that couple the hinge to front frame bracket 1236, the barrel cover 1232, and the hinge base 1204 together. In some embodiments, once the counter-sunk fasteners 1240A and 1240B are secured, the over-extension hinge 1201 also secures other components in place, e.g., the bearing 1212.

Step 1242 shows the temple arm 1244 being provided to be secured to the assembled over-extension hinge 1201. While not shown the other side 1246 of the over-extension hinge 1201 is configured to be coupled to the frame of the augmented-reality glasses. Step 1248 shows the temple arm 1244 being attached to the over-extension hinge 1201 to control movement of the temple arm 1244 relative to the frame, e.g., movement beyond the operating angles of the regular hinge.

(A1) In accordance with some embodiments, a pair of augmented-reality (AR) glasses comprises a primary hinge that includes a primary pivot axis defining movement between a temple arm attached to a glasses frame. The primary pivot axis provides an axis of rotation during closure and extension of the temple arm relative to the glasses frame between a first position and second position. A secondary hinge that includes a secondary pivot axis along an outer edge of the temple arm, wherein the secondary pivot axis is parallel to the primary pivot axis, wherein the secondary pivot axis provides an axis of rotation during an over-extension of the temple arm relative to the frame. In some embodiments, an AR projection system coupled to the frame, and a battery located in the temple arm is configured to provide power to the AR projection system coupled to the frame. Figures 1-12 illustrate a pair of augmented-reality glasses that include temple arms that are attached to a glasses frame, in which the temple arms move about the glasses frame via a primary hinge and a secondary hinge. In some embodiments, the primary hinge moves from a close position to an open position, where (i) the open position is when the temple arm is perpendicular to glasses frame (e.g., substantially perpendicular to +/-5 degrees) and (ii) the closed position is when the temple arm is parallel to the glasses frame (e.g., substantially parallel +/-5-15 degrees).

(A2) In some embodiments of A1, over-extension occurs when an angle between the frame arm and the glasses frame exceeds 90 degrees. For example, FIGs. 1, 2, 7, 8, and 10-11B show over extension occurring beyond about 90 degrees.

(A3) In some embodiments of any of A1-A2, the hinge module enables over-extension up to ten degrees. In some embodiments, the extension can be up to 15 degrees pr dependent of the amount of force being applied to the over extension hinge. For example, Figure 8 shows a range of motion for the over extension hinge.

(A4) In some embodiments of any of A1-A3, rotation occurs on the secondary pivot axis after maximum rotation is achieved on the primary pivot axis. For example, FIGs. 1, 2, 7, 8, and 10-11B show over extension occurring beyond about 90 degrees.

(A5) In some embodiments of any of A1-A4, the secondary hinge includes a spring that biases the temple arm to the second position during over-extension. For example, Figures 2B, 5, 8, 9, and 11A-12 all show springs being used to control the movement of the overextension hinge.

(A6) In some embodiments of A5, the spring is one of a leaf spring, a coil spring, or a torsion spring. For example, Figures 2B, 5, 8, 9, and 11A-12 all show springs being used to control the movement of the overextension hinge.

(A7) In some embodiments of any of A1-A6, the primary hinge and secondary hinge are configured to allow the pass-through of a flexible circuit that electrically couples at least the AR projection system to the battery. Figure 11A and 11B illustrate the pathway of the flexible circuit 1114 through the over-extension hinge.

(A8) In some embodiments of any of A1-A7, the secondary hinge includes a stop that limits the over-extension beyond ten degrees of the temple arm. For example, Figure 5 shows a travel pin 540 that can provide additional attachment security between hinge base 420 and paddle 400 and limit motion.

(A9) In some embodiments of any of A1-A8, the secondary hinge can be overextended along an additional axis of rotation and the system includes a spring that controls movement along both the secondary pivot axis and the additional axis of rotation. For example,

Figure 8 shows that movement of the temple arm 802 can occur along a first axis and a second axis, where the first axis is different from the second axis.

(A10) In some embodiments of any of A1-A9, a portion of the secondary hinge is coupled to the temple arm by one or more of welding, fasteners, and adhesives. For example step 1208
(A11) In some embodiments of any of A1-A10, the secondary hinge comprises a hinge base and a paddle connected to the hinge base via a travel pin. In some embodiments, the paddle comprises a cylindrical bearing surface to receive the travel pin, and enables movement of the hinge base relative to the paddle along a predefined range. In some embodiments, the secondary hinge comprises a preloaded spring maintaining a base position between the hinge base and the paddle. In some embodiments, movement of the hinge base relative to the paddle along the predefined range requires a force corresponding a stiffness of the preloaded spring.

(A12) In some embodiments of A11, the predefined range is within ten degrees.

(A13) In some embodiments of A11, the pair of AR glasses further comprise a first pair of attachments to secure the hinge base to a frame, and a second pair of attachments to secure the hinge base to a frame arm.

(A14) In some embodiments of A11, the stiffness of the preloaded spring is between 29-37 N/mm.

(B1) In accordance with some embodiments, a hinge system of a pair augmented-reality glasses, comprises a primary hinge that includes a primary pivot axis defining movement between a temple arm attached to a glasses frame. The primary pivot axis provides an axis of rotation during closure and extension of the temple arm relative to the glasses frame between a first position and second position. The pair of augmented-reality glasses comprise a secondary hinge that includes a secondary pivot axis along an outer edge of the temple arm, wherein the secondary pivot axis is parallel to the primary pivot axis. The secondary pivot axis provides an axis of rotation during an over-extension of the temple arm relative to the frame. The pair of augmented-reality glasses also comprise an AR projection system coupled to the frame, and a battery located in the temple arm that is configured to provide power to the AR projection system coupled to the frame. For example, Figure 9 shows an over-extension hinge that couples to a temple arm that includes a battery and a circuit board 900 housed within the temple arm that can include one or more components for providing an extended-reality experience.

(B2) In some embodiments of B1, over-extension occurs when an angle between the frame arm and the glasses frame exceeds 90 degrees.

(B2) In some embodiments of any of B1-B2, the hinge module enables over-extension up to ten degrees.

(C1) In accordance with some embodiments, a temple arm of a pair of augmented-reality glasses, comprises a primary hinge that includes a primary pivot axis defining movement between a temple arm attached to a glasses frame. The primary pivot axis provides an axis of rotation during closure and extension of the temple arm relative to the glasses frame between a first position and second position. The pair of augmented-reality glasses comprise a secondary hinge that includes a secondary pivot axis along an outer edge of the temple arm. The secondary pivot axis is parallel to the primary pivot axis, wherein the secondary pivot axis provides an axis of rotation during an over-extension of the temple arm relative to the frame. The temple arm includes one or more components configured to couple to an AR projection system coupled to the frame, and the temple arm includes a battery located in the temple arm that is configured to provide power to the AR projection system coupled to the frame.

(C2) In some embodiments of C1, over-extension occurs when an angle between the frame arm and the glasses frame exceeds 90 degrees.

(C3) In some embodiments of any of C1-C2, the hinge module enables over-extension up to ten degrees.

### Example Extended-Reality Systems

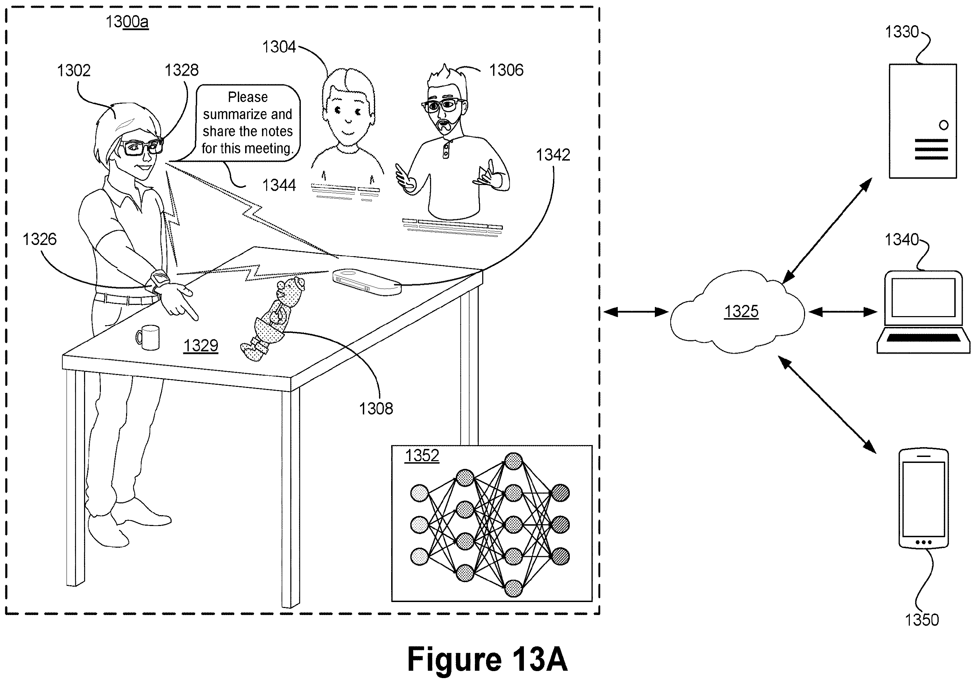

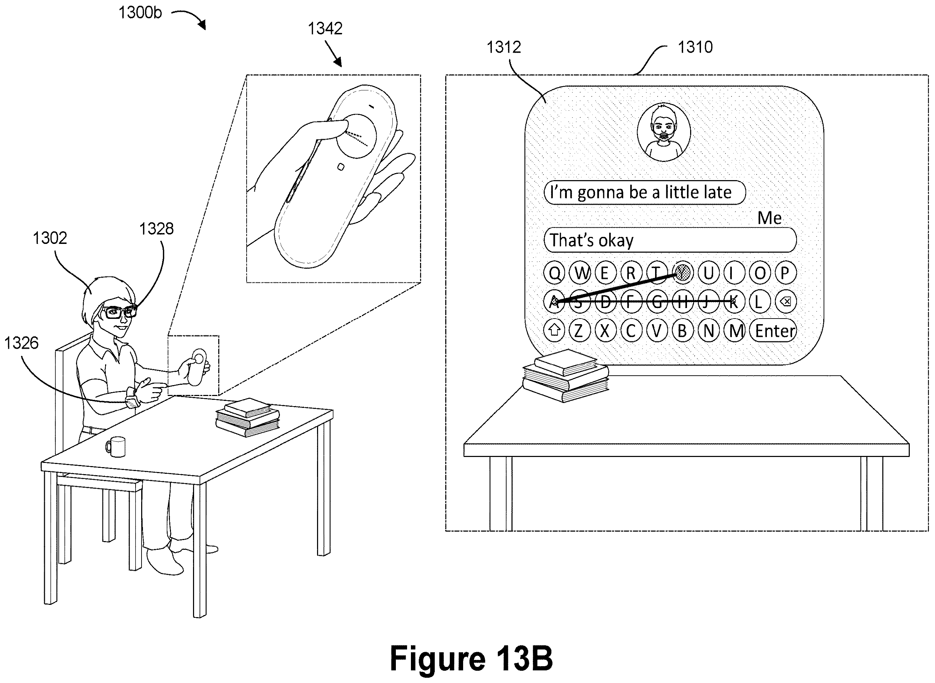

Figures 13A 13B, 13C-1, and 13C-2, illustrate example XR systems that include AR and MR systems, in accordance with some embodiments. Figure 13A shows a first XR system 1300a and first example user interactions using a wrist-wearable device 1326, a head-wearable device (e.g., AR device 1328), and/or a HIPD 1342. Figure 13B shows a second XR system 1300b and second example user interactions using a wrist-wearable device 1326, AR device 1328, and/or an HIPD 1342. Figures 13C-1 and 13C-2 show a third MR system 1300c and third example user interactions using a wrist-wearable device 1326, a head-wearable device (e.g., an MR device such as a VR device), and/or an HIPD 1342. As the skilled artisan will appreciate upon reading the descriptions provided herein, the above-example AR and MR systems (described in detail below) can perform various functions and/or operations.

The wrist-wearable device 1326, the head-wearable devices, and/or the HIPD 1342 can communicatively couple via a network 1325 (e.g., cellular, near field, Wi-Fi, personal area network, wireless LAN). Additionally, the wrist-wearable device 1326, the head-wearable device, and/or the HIPD 1342 can also communicatively couple with one or more servers 1330, computers 1340 (e.g., laptops, computers), mobile devices 1350 (e.g., smartphones, tablets), and/or other electronic devices via the network 1325 (e.g., cellular, near field, Wi-Fi, personal area network, wireless LAN). Similarly, a smart textile-based garment, when used, can also communicatively couple with the wrist-wearable device 1326, the head-wearable device(s), the HIPD 1342, the one or more servers 1330, the computers 1340, the mobile devices 1350, and/or other electronic devices via the network 1325 to provide inputs.

Turning to Figure 13A, a user 1302 is shown wearing the wrist-wearable device 1326 and the AR device 1328 and having the HIPD 1342 on their desk. The wrist-wearable device 1326, the AR device 1328, and the HIPD 1342 facilitate user interaction with an AR environment. In particular, as shown by the first AR system 1300a, the wrist-wearable device 1326, the AR device 1328, and/or the HIPD 1342 cause presentation of one or more avatars 1304, digital representations of contacts 1306, and virtual objects 1308. As discussed below, the user 1302 can interact with the one or more avatars 1304, digital representations of the contacts 1306, and virtual objects 1308 via the wrist-wearable device 1326, the AR device 1328, and/or the HIPD 1342. In addition, the user 1302 is also able to directly view physical objects in the environment, such as a physical table 1329, through transparent lens(es) and waveguide(s) of the AR device 1328. Alternatively, an MR device could be used in place of the AR device 1328 and a similar user experience can take place, but the user would not be directly viewing physical objects in the environment, such as table 1329, and would instead be presented with a virtual reconstruction of the table 1329 produced from one or more sensors of the MR device (e.g., an outward facing camera capable of recording the surrounding environment).

The user 1302 can use any of the wrist-wearable device 1326, the AR device 1328 (e.g., through physical inputs at the AR device and/or built-in motion tracking of a user's extremities), a smart-textile garment, externally mounted extremity tracking device, the HIPD 1342 to provide user inputs, etc. For example, the user 1302 can perform one or more hand gestures that are detected by the wrist-wearable device 1326 (e.g., using one or more EMG sensors and/or IMUs built into the wrist-wearable device) and/or AR device 1328 (e.g., using one or more image sensors or cameras) to provide a user input. Alternatively, or additionally, the user 1302 can provide a user input via one or more touch surfaces of the wrist-wearable device 1326, the AR device 1328, and/or the HIPD 1342, and/or voice commands captured by a microphone of the wrist-wearable device 1326, the AR device 1328, and/or the HIPD 1342. The wrist-wearable device 1326, the AR device 1328, and/or the HIPD 1342 include an artificially intelligent digital assistant to help the user in providing a user input (e.g., completing a sequence of operations, suggesting different operations or commands, providing reminders, confirming a command). For example, the digital assistant can be invoked through an input occurring at the AR device 1328 (e.g., via an input at a temple arm of the AR device 1328). In some embodiments, the user 1302 can provide a user input via one or more facial gestures and/or facial expressions. For example, cameras of the wrist-wearable device 1326, the AR device 1328, and/or the HIPD 1342 can track the user 1302's eyes for navigating a user interface.

The wrist-wearable device 1326, the AR device 1328, and/or the HIPD 1342 can operate alone or in conjunction to allow the user 1302 to interact with the AR environment. In some embodiments, the HIPD 1342 is configured to operate as a central hub or control center for the wrist-wearable device 1326, the AR device 1328, and/or another communicatively coupled device. For example, the user 1302 can provide an input to interact with the AR environment at any of the wrist-wearable device 1326, the AR device 1328, and/or the HIPD 1342, and the HIPD 1342 can identify one or more back-end and front-end tasks to cause the performance of the requested interaction and distribute instructions to cause the performance of the one or more back-end and front-end tasks at the wrist-wearable device 1326, the AR device 1328, and/or the HIPD 1342. In some embodiments, a back-end task is a background-processing task that is not perceptible by the user (e.g., rendering content, decompression, compression, application-specific operations), and a front-end task is a user-facing task that is perceptible to the user (e.g., presenting information to the user, providing feedback to the user). The HIPD 1342 can perform the back-end tasks and provide the wrist-wearable device 1326 and/or the AR device 1328 operational data corresponding to the performed back-end tasks such that the wrist-wearable device 1326 and/or the AR device 1328 can perform the front-end tasks. In this way, the HIPD 1342, which has more computational resources and greater thermal headroom than the wrist-wearable device 1326 and/or the AR device 1328, performs computationally intensive tasks and reduces the computer resource utilization and/or power usage of the wrist-wearable device 1326 and/or the AR device 1328.

In the example shown by the first AR system 1300a, the HIPD 1342 identifies one or more back-end tasks and front-end tasks associated with a user request to initiate an AR video call with one or more other users (represented by the avatar 1304 and the digital representation of the contact 1306) and distributes instructions to cause the performance of the one or more back-end tasks and front-end tasks. In particular, the HIPD 1342 performs back-end tasks for processing and/or rendering image data (and other data) associated with the AR video call and provides operational data associated with the performed back-end tasks to the AR device 1328 such that the AR device 1328 performs front-end tasks for presenting the AR video call (e.g., presenting the avatar 1304 and the digital representation of the contact 1306).

In some embodiments, the HIPD 1342 can operate as a focal or anchor point for causing the presentation of information. This allows the user 1302 to be generally aware of where information is presented. For example, as shown in the first AR system 1300a, the avatar 1304 and the digital representation of the contact 1306 are presented above the HIPD 1342. In particular, the HIPD 1342 and the AR device 1328 operate in conjunction to determine a location for presenting the avatar 1304 and the digital representation of the contact 1306. In some embodiments, information can be presented within a predetermined distance from the HIPD 1342 (e.g., within five meters). For example, as shown in the first AR system 1300a, virtual object 1308 is presented on the desk some distance from the HIPD 1342. Similar to the above example, the HIPD 1342 and the AR device 1328 can operate in conjunction to determine a location for presenting the virtual object 1308. Alternatively, in some embodiments, presentation of information is not bound by the HIPD 1342. More specifically, the avatar 1304, the digital representation of the contact 1306, and the virtual object 1308 do not have to be presented within a predetermined distance of the HIPD 1342. While an AR device 1328 is described working with an HIPD, an MR headset can be interacted with in the same way as the AR device 1328.

User inputs provided at the wrist-wearable device 1326, the AR device 1328, and/or the HIPD 1342 are coordinated such that the user can use any device to initiate, continue, and/or complete an operation. For example, the user 1302 can provide a user input to the AR device 1328 to cause the AR device 1328 to present the virtual object 1308 and, while the virtual object 1308 is presented by the AR device 1328, the user 1302 can provide one or more hand gestures via the wrist-wearable device 1326 to interact and/or manipulate the virtual object 1308. While an AR device 1328 is described working with a wrist-wearable device 1326, an MR headset can be interacted with in the same way as the AR device 1328.

### Integration of Artificial Intelligence with XR Systems

Figure 13A illustrates an interaction in which an artificially intelligent virtual assistant can assist in requests made by a user 1302. The AI virtual assistant can be used to complete open-ended requests made through natural language inputs by a user 1302. For example, in Figure 13A the user 1302 makes an audible request 1344 to summarize the conversation and then share the summarized conversation with others in the meeting. In addition, the AI virtual assistant is configured to use sensors of the XR system (e.g., cameras of an XR headset, microphones, and various other sensors of any of the devices in the system) to provide contextual prompts to the user for initiating tasks.

Figure 13A also illustrates an example neural network 1352 used in Artificial Intelligence applications. Uses of Artificial Intelligence (AI) are varied and encompass many different aspects of the devices and systems described herein. AI capabilities cover a diverse range of applications and deepen interactions between the user 1302 and user devices (e.g., the AR device 1328, an MR device 1332, the HIPD 1342, the wrist-wearable device 1326). The AI discussed herein can be derived using many different training techniques. While the primary AI model example discussed herein is a neural network, other AI models can be used. Non-limiting examples of AI models include artificial neural networks (ANNs), deep neural networks (DNNs), convolution neural networks (CNNs), recurrent neural networks (RNNs), large language models (LLMs), long short-term memory networks, transformer models, decision trees, random forests, support vector machines, k-nearest neighbors, genetic algorithms, Markov models, Bayesian networks, fuzzy logic systems, and deep reinforcement learnings, etc. The AI models can be implemented at one or more of the user devices, and/or any other devices described herein. For devices and systems herein that employ multiple AI models, different models can be used depending on the task. For example, for a natural-language artificially intelligent virtual assistant, an LLM can be used and for the object detection of a physical environment, a DNN can be used instead.

In another example, an AI virtual assistant can include many different AI models and based on the user's request, multiple AI models may be employed (concurrently, sequentially or a combination thereof). For example, an LLM-based AI model can provide instructions for helping a user follow a recipe and the instructions can be based in part on another AI model that is derived from an ANN, a DNN, an RNN, etc. that is capable of discerning what part of the recipe the user is on (e.g., object and scene detection).

As AI training models evolve, the operations and experiences described herein could potentially be performed with different models other than those listed above, and a person skilled in the art would understand that the list above is non-limiting.

A user 1302 can interact with an AI model through natural language inputs captured by a voice sensor, text inputs, or any other input modality that accepts natural language and/or a corresponding voice sensor module. In another instance, input is provided by tracking the eye gaze of a user 1302 via a gaze tracker module. Additionally, the AI model can also receive inputs beyond those supplied by a user 1302. For example, the AI can generate its response further based on environmental inputs (e.g., temperature data, image data, video data, ambient light data, audio data, GPS location data, inertial measurement (i.e., user motion) data, pattern recognition data, magnetometer data, depth data, pressure data, force data, neuromuscular data, heart rate data, temperature data, sleep data) captured in response to a user request by various types of sensors and/or their corresponding sensor modules. The sensors' data can be retrieved entirely from a single device (e.g., AR device 1328) or from multiple devices that are in communication with each other (e.g., a system that includes at least two of an AR device 1328, an MR device 1332, the HIPD 1342, the wrist-wearable device 1326, etc.). The AI model can also access additional information (e.g., one or more servers 1330, the computers 1340, the mobile devices 1350, and/or other electronic devices) via a network 1325.

A non-limiting list of Al-enhanced functions includes but is not limited to image recognition, speech recognition (e.g., automatic speech recognition), text recognition (e.g., scene text recognition), pattern recognition, natural language processing and understanding, classification, regression, clustering, anomaly detection, sequence generation, content generation, and optimization. In some embodiments, Al-enhanced functions are fully or partially executed on cloud-computing platforms communicatively coupled to the user devices (e.g., the AR device 1328, an MR device 1332, the HIPD 1342, the wrist-wearable device 1326) via the one or more networks. The cloud-computing platforms provide scalable computing resources, distributed computing, managed AI services, interference acceleration, pre-trained models, APIs and/or other resources to support comprehensive computations required by the Al-enhanced function.

Example outputs stemming from the use of an AI model can include natural language responses, mathematical calculations, charts displaying information, audio, images, videos, texts, summaries of meetings, predictive operations based on environmental factors, classifications, pattern recognitions, recommendations, assessments, or other operations. In some embodiments, the generated outputs are stored on local memories of the user devices (e.g., the AR device 1328, an MR device 1332, the HIPD 1342, the wrist-wearable device 1326), storage options of the external devices (servers, computers, mobile devices, etc.), and/or storage options of the cloud-computing platforms.

The Al-based outputs can be presented across different modalities (e.g., audio-based, visual-based, haptic-based, and any combination thereof) and across different devices of the XR system described herein. Some visual-based outputs can include the displaying of information on XR augments of an XR headset, user interfaces displayed at a wrist-wearable device, laptop device, mobile device, etc. On devices with or without displays (e.g., HIPD 1342), haptic feedback can provide information to the user 1302. An AI model can also use the inputs described above to determine the appropriate modality and device(s) to present content to the user (e.g., a user walking on a busy road can be presented with an audio output instead of a visual output to avoid distracting the user 1302).

### Example Augmented Reality Interaction

Figure 13B shows the user 1302 wearing the wrist-wearable device 1326 and the AR device 1328 and holding the HIPD 1342. In the second AR system 1300b, the wrist-wearable device 1326, the AR device 1328, and/or the HIPD 1342 are used to receive and/or provide one or more messages to a contact of the user 1302. In particular, the wrist-wearable device 1326, the AR device 1328, and/or the HIPD 1342 detect and coordinate one or more user inputs to initiate a messaging application and prepare a response to a received message via the messaging application.

In some embodiments, the user 1302 initiates, via a user input, an application on the wrist-wearable device 1326, the AR device 1328, and/or the HIPD 1342 that causes the application to initiate on at least one device. For example, in the second AR system 1300b the user 1302 performs a hand gesture associated with a command for initiating a messaging application (represented by messaging user interface 1312); the wrist-wearable device 1326 detects the hand gesture; and, based on a determination that the user 1302 is wearing the AR device 1328, causes the AR device 1328 to present a messaging user interface 1312 of the messaging application. The AR device 1328 can present the messaging user interface 1312 to the user 1302 via its display (e.g., as shown by user 1302's field of view 1310). In some embodiments, the application is initiated and can be run on the device (e.g., the wrist-wearable device 1326, the AR device 1328, and/or the HIPD 1342) that detects the user input to initiate the application, and the device provides another device operational data to cause the presentation of the messaging application. For example, the wrist-wearable device 1326 can detect the user input to initiate a messaging application, initiate and run the messaging application, and provide operational data to the AR device 1328 and/or the HIPD 1342 to cause presentation of the messaging application. Alternatively, the application can be initiated and run at a device other than the device that detected the user input. For example, the wrist-wearable device 1326 can detect the hand gesture associated with initiating the messaging application and cause the HIPD 1342 to run the messaging application and coordinate the presentation of the messaging application.

Further, the user 1302 can provide a user input provided at the wrist-wearable device 1326, the AR device 1328, and/or the HIPD 1342 to continue and/or complete an operation initiated at another device. For example, after initiating the messaging application via the wrist-wearable device 1326 and while the AR device 1328 presents the messaging user interface 1312, the user 1302 can provide an input at the HIPD 1342 to prepare a response (e.g., shown by the swipe gesture performed on the HIPD 1342). The user 1302's gestures performed on the HIPD 1342 can be provided and/or displayed on another device. For example, the user 1302's swipe gestures performed on the HIPD 1342 are displayed on a virtual keyboard of the messaging user interface 1312 displayed by the AR device 1328.

In some embodiments, the wrist-wearable device 1326, the AR device 1328, the HIPD 1342, and/or other communicatively coupled devices can present one or more notifications to the user 1302. The notification can be an indication of a new message, an incoming call, an application update, a status update, etc. The user 1302 can select the notification via the wrist-wearable device 1326, the AR device 1328, or the HIPD 1342 and cause presentation of an application or operation associated with the notification on at least one device. For example, the user 1302 can receive a notification that a message was received at the wrist-wearable device 1326, the AR device 1328, the HIPD 1342, and/or other communicatively coupled device and provide a user input at the wrist-wearable device 1326, the AR device 1328, and/or the HIPD 1342 to review the notification, and the device detecting the user input can cause an application associated with the notification to be initiated and/or presented at the wrist-wearable device 1326, the AR device 1328, and/or the HIPD 1342.

While the above example describes coordinated inputs used to interact with a messaging application, the skilled artisan will appreciate upon reading the descriptions that user inputs can be coordinated to interact with any number of applications including, but not limited to, gaming applications, social media applications, camera applications, web-based applications, financial applications, etc. For example, the AR device 1328 can present to the user 1302 game application data and the HIPD 1342 can use a controller to provide inputs to the game. Similarly, the user 1302 can use the wrist-wearable device 1326 to initiate a camera of the AR device 1328, and the user can use the wrist-wearable device 1326, the AR device 1328, and/or the HIPD 1342 to manipulate the image capture (e.g., zoom in or out, apply filters) and capture image data.

While an AR device 1328 is shown being capable of certain functions, it is understood that an AR device can be an AR device with varying functionalities based on costs and market demands. For example, an AR device may include a single output modality such as an audio output modality. In another example, the AR device may include a low-fidelity display as one of the output modalities, where simple information (e.g., text and/or low-fidelity images/video) is capable of being presented to the user. In yet another example, the AR device can be configured with face-facing light emitting diodes (LEDs) configured to provide a user with information, e.g., an LED around the right-side lens can illuminate to notify the wearer to turn right while directions are being provided or an LED on the left-side can illuminate to notify the wearer to turn left while directions are being provided. In another embodiment, the AR device can include an outward-facing projector such that information (e.g., text information, media) may be displayed on the palm of a user's hand or other suitable surface (e.g., a table, whiteboard). In yet another embodiment, information may also be provided by locally dimming portions of a lens to emphasize portions of the environment in which the user's attention should be directed. Some AR devices can present AR augments either monocularly or binocularly (e.g., an AR augment can be presented at only a single display associated with a single lens as opposed presenting an AR augmented at both lenses to produce a binocular image). In some instances an AR device capable of presenting AR augments binocularly can optionally display AR augments monocularly as well (e.g., for power-saving purposes or other presentation considerations). These examples are non-exhaustive and features of one AR device described above can be combined with features of another AR device described above. While features and experiences of an AR device have been described generally in the preceding sections, it is understood that the described functionalities and experiences can be applied in a similar manner to an MR headset, which is described below in the proceeding sections.

### Example Mixed Reality Interaction

Turning to Figures 13C-1 and 13C-2, the user 1302 is shown wearing the wrist-wearable device 1326 and an MR device 1332 (e.g., a device capable of providing either an entirely VR experience or an MR experience that displays object(s) from a physical environment at a display of the device) and holding the HIPD 1342. In the third AR system 1300c, the wrist-wearable device 1326, the MR device 1332, and/or the HIPD 1342 are used to interact within an MR environment, such as a VR game or other MR/VR application. While the MR device 1332 presents a representation of a VR game (e.g., first MR game environment 1320) to the user 1302, the wrist-wearable device 1326, the MR device 1332, and/or the HIPD 1342 detect and coordinate one or more user inputs to allow the user 1302 to interact with the VR game.

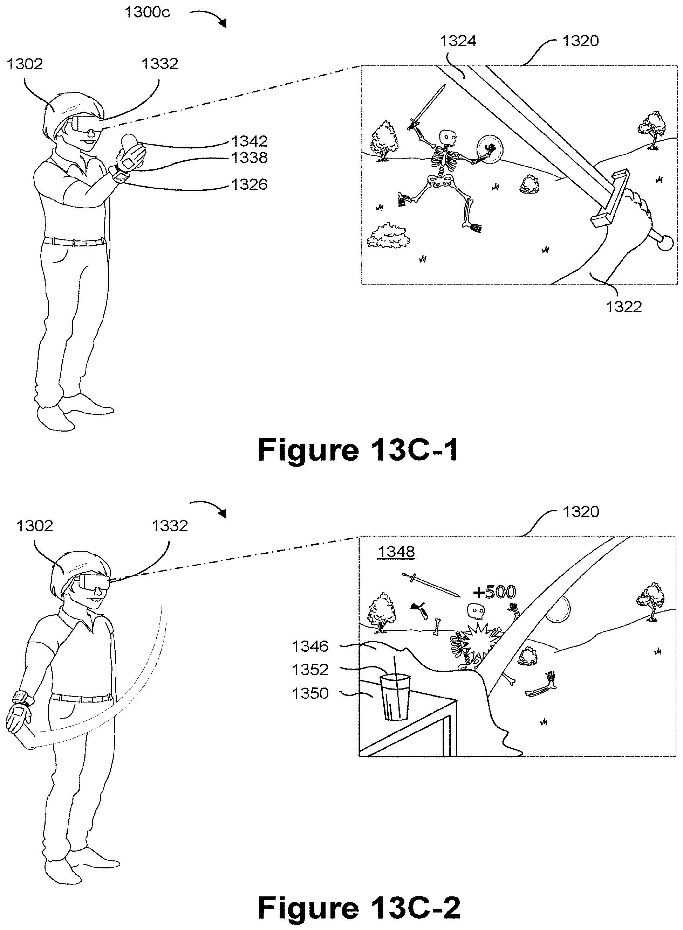

In some embodiments, the user 1302 can provide a user input via the wrist-wearable device 1326, the MR device 1332, and/or the HIPD 1342 that causes an action in a corresponding MR environment. For example, the user 1302 in the third MR system 1300c (shown in Figure 13C-1) raises the HIPD 1342 to prepare for a swing in the first MR game environment 1320. The MR device 1332, responsive to the user 1302 raising the HIPD 1342, causes the MR representation of the user 1322 to perform a similar action (e.g., raise a virtual object, such as a virtual sword 1324). In some embodiments, each device uses respective sensor data and/or image data to detect the user input and provide an accurate representation of the user 1302's motion. For example, image sensors (e.g., SLAM cameras or other cameras) of the HIPD 1342 can be used to detect a position of the HIPD 1342 relative to the user 1302's body such that the virtual object can be positioned appropriately within the first MR game environment 1320; sensor data from the wrist-wearable device 1326 can be used to detect a velocity at which the user 1302 raises the HIPD 1342 such that the MR representation of the user 1322 and the virtual sword 1324 are synchronized with the user 1302's movements; and image sensors of the MR device 1332 can be used to represent the user 1302's body, boundary conditions, or real-world objects within the first MR game environment 1320.

In Figure 13C-2, the user 1302 performs a downward swing while holding the HIPD 1342. The user 1302's downward swing is detected by the wrist-wearable device 1326, the MR device 1332, and/or the HIPD 1342 and a corresponding action is performed in the first MR game environment 1320. In some embodiments, the data captured by each device is used to improve the user's experience within the MR environment. For example, sensor data of the wrist-wearable device 1326 can be used to determine a speed and/or force at which the downward swing is performed and image sensors of the HIPD 1342 and/or the MR device 1332 can be used to determine a location of the swing and how it should be represented in the first MR game environment 1320, which, in turn, can be used as inputs for the MR environment (e.g., game mechanics, which can use detected speed, force, locations, and/or aspects of the user 1302's actions to classify a user's inputs (e.g., user performs a light strike, hard strike, critical strike, glancing strike, miss) or calculate an output (e.g., amount of damage)).

Figure 13C-2 further illustrates that a portion of the physical environment is reconstructed and displayed at a display of the MR device 1332 while the MR game environment 1320 is being displayed. In this instance, a reconstruction of the physical environment 1346 is displayed in place of a portion of the MR game environment 1320 when object(s) in the physical environment are potentially in the path of the user (e.g., a collision with the user and an object in the physical environment are likely). Thus, this example MR game environment 1320 includes (i) an immersive VR portion 1348 (e.g., an environment that does not have a corollary counterpart in a nearby physical environment) and (ii) a reconstruction of the physical environment 1346 (e.g., table 1350 and cup 1352). While the example shown here is an MR environment that shows a reconstruction of the physical environment to avoid collisions, other uses of reconstructions of the physical environment can be used, such as defining features of the virtual environment based on the surrounding physical environment (e.g., a virtual column can be placed based on an object in the surrounding physical environment (e.g., a tree)).

While the wrist-wearable device 1326, the MR device 1332, and/or the HIPD 1342 are described as detecting user inputs, in some embodiments, user inputs are detected at a single device (with the single device being responsible for distributing signals to the other devices for performing the user input). For example, the HIPD 1342 can operate an application for generating the first MR game environment 1320 and provide the MR device 1332 with corresponding data for causing the presentation of the first MR game environment 1320, as well as detect the user 1302's movements (while holding the HIPD 1342) to cause the performance of corresponding actions within the first MR game environment 1320. Additionally or alternatively, in some embodiments, operational data (e.g., sensor data, image data, application data, device data, and/or other data) of one or more devices is provided to a single device (e.g., the HIPD 1342) to process the operational data and cause respective devices to perform an action associated with processed operational data.

In some embodiments, the user 1302 can wear a wrist-wearable device 1326, wear an MR device 1332, wear smart textile-based garments 1338 (e.g., wearable haptic gloves), and/or hold an HIPD 1342 device. In this embodiment, the wrist-wearable device 1326, the MR device 1332, and/or the smart textile-based garments 1338 are used to interact within an MR environment (e.g., any AR or MR system described above in reference to Figures 13A-13B). While the MR device 1332 presents a representation of an MR game (e.g., second MR game environment 1320) to the user 1302, the wrist-wearable device 1326, the MR device 1332, and/or the smart textile-based garments 1338 detect and coordinate one or more user inputs to allow the user 1302 to interact with the MR environment.

In some embodiments, the user 1302 can provide a user input via the wrist-wearable device 1326, an HIPD 1342, the MR device 1332, and/or the smart textile-based garments 1338 that causes an action in a corresponding MR environment. In some embodiments, each device uses respective sensor data and/or image data to detect the user input and provide an accurate representation of the user 1302's motion. While four different input devices are shown (e.g., a wrist-wearable device 1326, an MR device 1332, an HIPD 1342, and a smart textile-based garment 1338) each one of these input devices entirely on its own can provide inputs for fully interacting with the MR environment. For example, the wrist-wearable device can provide sufficient inputs on its own for interacting with the MR environment. In some embodiments, if multiple input devices are used (e.g., a wrist-wearable device and the smart textile-based garment 1338) sensor fusion can be utilized to ensure inputs are correct. While multiple input devices are described, it is understood that other input devices can be used in conjunction or on their own instead, such as but not limited to external motion-tracking cameras, other wearable devices fitted to different parts of a user, apparatuses that allow for a user to experience walking in an MR environment while remaining substantially stationary in the physical environment, etc.

As described above, the data captured by each device is used to improve the user's experience within the MR environment. Although not shown, the smart textile-based garments 1338 can be used in conjunction with an MR device and/or an HIPD 1342.

While some experiences are described as occurring on an AR device and other experiences are described as occurring on an MR device, one skilled in the art would appreciate that experiences can be ported over from an MR device to an AR device, and vice versa.

Some definitions of devices and components that can be included in some or all of the example devices discussed are defined here for ease of reference. A skilled artisan will appreciate that certain types of the components described may be more suitable for a particular set of devices, and less suitable for a different set of devices. But subsequent reference to the components defined here should be considered to be encompassed by the definitions provided.

In some embodiments example devices and systems, including electronic devices and systems, will be discussed. Such example devices and systems are not intended to be limiting, and one of skill in the art will understand that alternative devices and systems to the example devices and systems described herein may be used to perform the operations and construct the systems and devices that are described herein.

As described herein, an electronic device is a device that uses electrical energy to perform a specific function. It can be any physical object that contains electronic components such as transistors, resistors, capacitors, diodes, and integrated circuits. Examples of electronic devices include smartphones, laptops, digital cameras, televisions, gaming consoles, and music players, as well as the example electronic devices discussed herein. As described herein, an intermediary electronic device is a device that sits between two other electronic devices, and/or a subset of components of one or more electronic devices and facilitates communication, and/or data processing and/or data transfer between the respective electronic devices and/or electronic components.

Any data collection performed by the devices described herein and/or any devices configured to perform or cause the performance of the different embodiments described above in reference to any of the Figures, hereinafter the "devices," is done with user consent and in a manner that is consistent with all applicable privacy laws. Users are given options to allow the devices to collect data, as well as the option to limit or deny collection of data by the devices. A user is able to opt in or opt out of any data collection at any time. Further, users are given the option to request the removal of any collected data.

It will be understood that, although the terms "first," "second," etc. may be used herein to describe various elements, these elements should not be limited by these terms. These terms are only used to distinguish one element from another.

The terminology used herein is for the purpose of describing particular embodiments only and is not intended to be limiting of the claims. As used in the description of the embodiments and the appended claims, the singular forms "a," "an" and "the" are intended to include the plural forms as well, unless the context clearly indicates otherwise. It will also be understood that the term "and/or" as used herein refers to and encompasses any and all possible combinations of one or more of the associated listed items. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

As used herein, the term "if" can be construed to mean "when" or "upon" or "in response to determining" or "in accordance with a determination" or "in response to detecting," that a stated condition precedent is true, depending on the context. Similarly, the phrase "if it is determined [that a stated condition precedent is true]" or "if [a stated condition precedent is true]" or "when [a stated condition precedent is true]" can be construed to mean "upon determining" or "in response to determining" or "in accordance with a determination" or "upon detecting" or "in response to detecting" that the stated condition precedent is true, depending on the context.

The foregoing description, for purpose of explanation, has been described with reference to specific embodiments. However, the illustrative discussions above are not intended to be exhaustive or to limit the claims to the precise forms disclosed. Many modifications and variations are possible in view of the above teachings. The embodiments were chosen and described in order to best explain principles of operation and practical applications, to thereby enable others skilled in the art.

## Claims

1. A pair of augmented-reality (AR) glasses, comprising:
a primary hinge that comprises a primary pivot axis defining movement between a temple arm attached to a glasses frame, wherein the primary pivot axis provides an axis of rotation during closure and extension of the temple arm relative to the glasses frame between a first position and second position;
a secondary hinge that comprises a secondary pivot axis along an outer edge of the temple arm, wherein the secondary pivot axis is parallel to the primary pivot axis, wherein the secondary pivot axis provides an axis of rotation during an over-extension of the temple arm relative to the frame; and
an AR projection system coupled to the frame;
a battery located in the temple arm that is configured to provide power to the AR projection system coupled to the frame.

2. The pair of AR glasses of claim 1, and one or more of the following:
(i) wherein over-extension occurs when an angle between the frame arm and the glasses frame exceeds 90 degrees;
(ii) wherein the secondary hinge enables over-extension up to ten degrees.

3. The pair of AR glasses of claim 1 or claim 2, wherein rotation occurs on the secondary pivot axis after maximum rotation is achieved on the primary pivot axis.

4. The pair of AR glasses of any preceding claim , wherein the secondary hinge comprises a spring that biases the temple arm to the second position during over-extension;
optionally, wherein the spring is one of a leaf spring, a coil spring, or a torsion spring.

5. The pair of AR glasses of any preceding claim, wherein the primary hinge and secondary hinge are configured to allow the pass-through of a flexible circuit that electrically couples at least the AR projection system to the battery.

6. The pair of AR glasses of any preceding claim, wherein the secondary hinge comprises a stop that limits the over-extension beyond ten degrees of the temple arm.

7. The pair of AR glasses of any preceding claim, wherein the secondary hinge can be overextended along an additional axis of rotation and the system comprises a spring that controls movement along both the secondary pivot axis and the additional axis of rotation.

8. The pair of AR glasses of any preceding claim, wherein a portion of the secondary hinge is coupled to the temple arm by one or more of welding, fasteners, and adhesives.

9. The pair of AR glasses of any preceding claim, wherein the secondary hinge comprises:
a hinge base;
a paddle connected to the hinge base via a travel pin, wherein the paddle comprises a cylindrical bearing surface to receive the travel pin, and enable movement of the hinge base relative to the paddle along a predefined range;
a preloaded spring maintaining a base position between the hinge base and the paddle, wherein movement of the hinge base relative to the paddle along the predefined range requires a force corresponding a stiffness of the preloaded spring;
optionally, wherein the predefined range is within ten degrees.

10. The pair of AR glasses of claim 9, comprising a first pair of attachments to secure the hinge base to a frame, and a second pair of attachments to secure the hinge base to a frame arm.

11. The pair of AR glasses of claim 9 or claim 10, wherein the stiffness of the preloaded spring is between 29-37 N/mm.

12. A hinge system of a pair augmented-reality glasses, comprising:
a primary hinge that comprises a primary pivot axis defining movement between a temple arm attached to a glasses frame, wherein the primary pivot axis provides an axis of rotation during closure and extension of the temple arm relative to the glasses frame between a first position and second position;
a secondary hinge that comprises a secondary pivot axis along an outer edge of the temple arm, wherein the secondary pivot axis is parallel to the primary pivot axis, wherein the secondary pivot axis provides an axis of rotation during an over-extension of the temple arm relative to the frame; and
an AR projection system coupled to the frame;
a battery located in the temple arm that is configured to provide power to the AR projection system coupled to the frame.

13. The hinge system of claim 12, and one or more of the following:
(i) wherein over-extension occurs when an angle between the frame arm and the glasses frame exceeds 90 degrees;
(ii) wherein the secondary hinge enables over-extension up to ten degrees.

14. A temple arm of a pair of augmented-reality glasses, comprising:
a primary hinge that comprises a primary pivot axis defining movement between a temple arm attached to a glasses frame, wherein the primary pivot axis provides an axis of rotation during closure and extension of the temple arm relative to the glasses frame between a first position and second position;
a secondary hinge that comprises a secondary pivot axis along an outer edge of the temple arm, wherein the secondary pivot axis is parallel to the primary pivot axis, wherein the secondary pivot axis provides an axis of rotation during an over-extension of the temple arm relative to the frame; and
an AR projection system coupled to the frame;
a battery located in the temple arm that is configured to provide power to the AR projection system coupled to the frame.

15. The temple arm of the pair of augmented-reality glasses of claim 14, and one or more of the following:
(i) wherein over-extension occurs when an angle between the frame arm and the glasses frame exceeds 90 degrees;
(ii) wherein the secondary hinge enables over-extension up to ten degrees.
